# EUROPEAN PATENT APPLICATION

(11) **EP 4 279 882 A1**
(43) Date of publication of application: **22.11.2023**
(21) Application number: 22739488.9
(22) Date of filing: 14.01.2022
(51) Int. Cl.: G01G 3/14

(54) **SCALE, STRAIN-GENERATING BODY, AND LOAD CELL**

(30) Priority: 15.01.2021 JP 2021005215
(71) Applicant: Tanita Corporation, Tokyo 174-8630 (JP)
(72) Inventor: HONDA, Akihisa, Tokyo 174-8630 (JP)
(74) Representative: Barker Brettell LLP
(86) International application number: PCT/JP2022/001114
(87) International publication number: WO 2022/154083

(57) **Abstract**

A scale is provided with: a case base; and a case cover arranged on the case base, the case cover being configured such that a load is applied to the case cover. The scale is provided with: a plurality of strain generating bodies configured to support the case cover on the case base, the strain generating bodies each having a strain generating part, the strain generating part being configured to be elastically deformed by receiving the load applied to the case cover; and a strain sensor provided on the strain generating part of each of the strain generating bodies, the strain sensor being configured to give a resistance value varied in accordance with tension and compression due to deformation of the strain generating part. The strain sensor includes a first strain gauge and a second strain gauge, the first strain gauge being arranged at a site deformed into the recessed shape in a state in which the strain generating part is elastically deformed, and the second strain gauge being arranged at a site deformed into the projected shape in a state in which the strain generating part is elastically deformed. In a mutually adjacent pair among the strain generating bodies, the strain sensor of the strain generating body serving as a first partner is arranged on a front surface of the strain generating part, and the strain sensor of the strain generating body serving as a second partner is arranged on a back surface of the strain generating part.

## Description

### TECHNICAL FIELD

The present invention relates to a scale, a strain generating body, and a load cell.

### BACKGROUND ART

JP2014-109438A discloses a measuring device having strain generating bodies at four corners. Strain sensors are respectively attached to strain generating parts of the strain generating bodies.

The strain sensors are each formed of a pair of strain gauges that are arranged so as to be spaced in the longitudinal direction of the strain generating part. The measuring device measures applied load on the basis of resistance values of the respective strain gauges.

### SUMMARY OF INVENTION

However, in the above-described measuring device, when a rigidity of an upper plate, to which the load is applied, is low, deflection is caused to the upper plate due to the applied load, and the input direction of the load that is input from the upper plate to the strain generating bodies is inclined. In such a case, compared with a case in which the load is input vertically with respect to the strain generating bodies, a deformed state of the strain generating parts, at which strain is caused in the strain generating bodies, is changed.

In this case, differences in the strain caused in the respective strain gauges of the strain sensors that are provided on the strain generating parts are increased, and an instrumental error property is affected by this increase.

The present invention has been conceived in light of the problems mentioned above, and an object thereof is to provide a scale, a strain generating body, and a load cell capable of suppressing influences on an instrumental error property.

According to an aspect of the present invention, the scale includes a case base and a case cover arranged on the case base, the case cover being configured such that a load is applied to the case cover. The scale includes: a plurality of strain generating bodies configured to support the case cover on the case base, the strain generating bodies each having a strain generating part, the strain generating part being configuration to be elastically deformed by receiving the load applied to the case cover; and a strain sensor provided on the strain generating part of the strain generating body, the strain sensor being configured to give a resistance value varied in accordance with tension and compression due to deformation of the strain generating part. The strain sensor includes a first strain gauge and a second strain gauge, the first strain gauge being arranged at a site deformed into a recessed shape in a state in which the strain generating part is elastically deformed, and the second strain gauge being arranged at a site deformed into a projected shape in a state in which the strain generating part is elastically deformed. In a mutually adjacent pair among the strain generating bodies, the strain sensor of the strain generating body as a first partner is arranged on a front surface of the strain generating part, and the strain sensor of the strain generating body as a second partner is arranged on a back surface of the strain generating part.

In the scale of this aspect, in a case in which the deflection is caused in the case cover and the input direction of the load to the strain generating body is inclined, the strain level appears at a higher level in one site of the recessed site that is deformed into the recessed shape and the projected site that is deformed into the projected shape, and the strain level appears at a lower level in the other site. With such a configuration, a balance between the tensile force and the compressive force generated in the each gauge is changed in a single strain sensor.

As a countermeasure for this issue, in this aspect, in order to cancel out the change in the balance between the tensile force and the compressive force generated in each gauge due to the inclined input direction of the load, the strain sensor of a strain generating body serving as a first partner of the strain generating bodies forming a pair is arranged on the back surface of the strain generating part, and the strain sensor of a strain generating body serving as a second partner thereof is arranged on the front surface of the strain generating part.

In the first-partner strain generating body in which the strain sensor is arranged on the back surface, as an example, the tensile force generated in the first strain gauge arranged at the recessed site is increased, and the compressive force generated in the second strain gauge arranged at the projected site is decreased. On the other hand, in the second-partner strain generating body in which the strain sensor is arranged on the front surface, the compressive force generated in the first strain gauge arranged at the recessed site is increased, and the tensile force generated in the second strain gauge arranged at the projected site is decreased.

Therefore, it is possible to suppress the influences on the output on the tension side by the combination of the output from the first strain gauge of the first-partner strain generating body, in which the tensile force is exerted at a higher level, and the output from the second strain gauge of the second-partner strain generating body, in which the tensile force is exerted at a lower level. In addition, it is possible to suppress the influences on the output on the compression side by the combination of the output from the first strain gauge of the second-partner strain generating body, in which the compressive force is exerted at a higher level, and the output from the second strain gauge of the first-partner strain generating body, in which the compressive force is exerted at a lower level.

Thus, even in a case in which the input direction of the load input to the strain generating bodies is inclined and in which the differences in the strain caused in the respective strain gauges of the strain sensors provided on the strain generating parts are increased, it is possible to suppress the influence on the instrumental error property.

### BRIEF DESCRIPTION OF DRAWINGS

[FIG. 1] FIG. 1 is a perspective view showing a scale according to a first embodiment.
[FIG. 2] FIG. 2 is a partially transparent view showing a plan view of the scale according to the first embodiment.
[FIG. 3] FIG. 3 is a sectional view taken along line A-A in FIG. 1.
[FIG. 4] FIG. 4 is an enlarged view showing a relevant portion of FIG. 3.
[FIG. 5] FIG. 5 is a plan view showing a support body according to the first embodiment.
[FIG. 6] FIG. 6 is an exploded perspective view showing the support body according to the first embodiment.
[FIG. 7] FIG. 7 is a plan view showing a strain generating body according to the first embodiment.
[FIG. 8] FIG. 8 is a plan view showing a strain generating part of the strain generating body according to the according to the first embodiment and a strain sensor provided on the strain generating part.
[FIG. 9] FIG. 9 is a circuit diagram showing a connection state of strain gauges of the respective strain sensors according to the first embodiment.
[FIG. 10] FIG. 10 is a wiring diagram showing a state in which the strain sensors respectively provided on the strain generating bodies according to the first embodiment are connected by wiring.
[FIG. 11] FIG. 11 is a sectional view showing a state of a strain generating body of a third support body when a case cover according to the first embodiment is subjected to the deflection.
[FIG. 12] FIG. 12 is a sectional view showing a state of a strain generating body of a fourth support body when the case cover according to the first embodiment is subjected to the deflection.
[FIG. 13] FIG. 13 is a circuit diagram showing the connection state of the strain gauges of the respective strain sensors according to a second embodiment.
[FIG. 14] FIG. 14 is a plan view showing the strain generating part of the strain generating body according to the second embodiment and the strain sensor provided on the strain generating part.
[FIG. 15] FIG. 15 is a sectional view showing a relevant portion of the scale according to a third embodiment.
[FIG. 16] FIG. 16 is a circuit diagram showing the connection state of the strain gauges of the respective strain sensors according to the third embodiment.
[FIG. 17] FIG. 17 is a wiring diagram showing an example of a state in which the respective strain gauges provided on the strain generating bodies according to the third embodiment are connected by the wiring.
[FIG. 18] FIG. 18 is a circuit diagram showing the connection state of the strain gauges of the respective strain sensors according to a fourth embodiment.

### DESCRIPTION OF EMBODIMENTS

In the following, respective embodiments will be described with reference to the attached drawings.

### < First Embodiment>

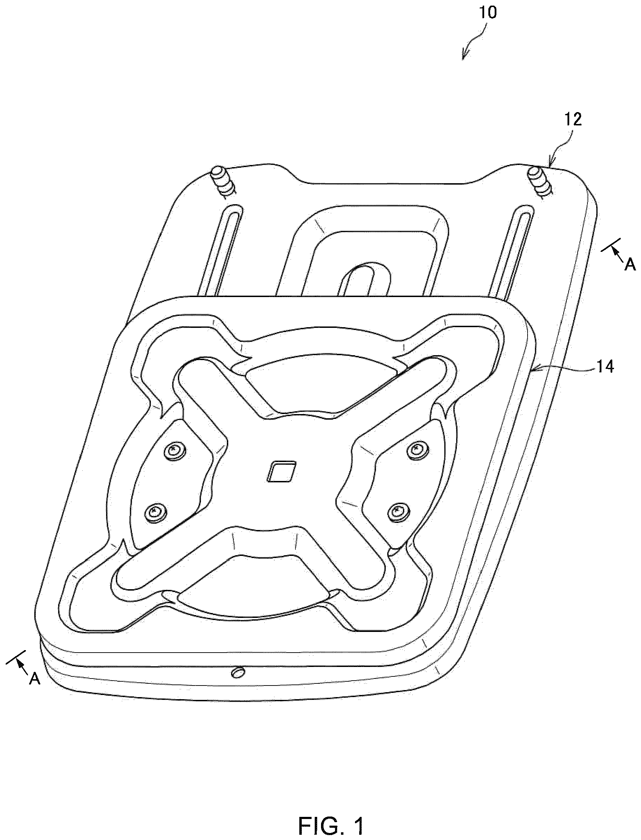

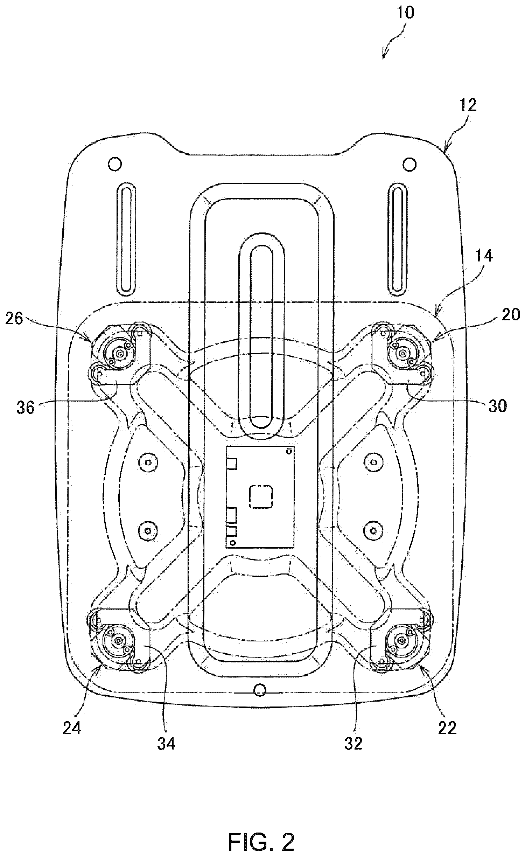

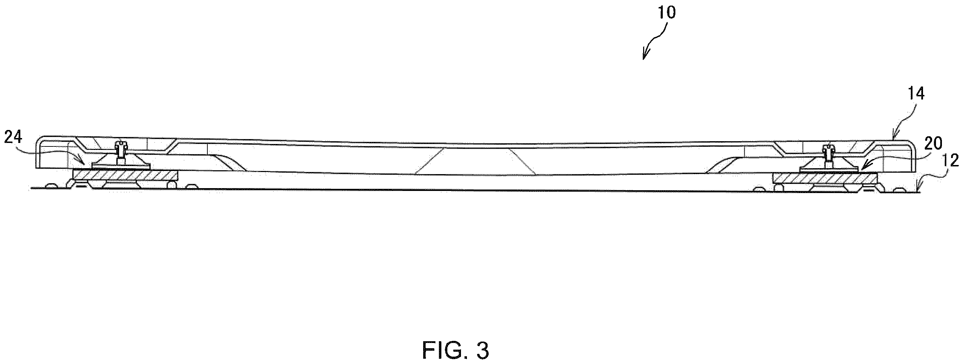

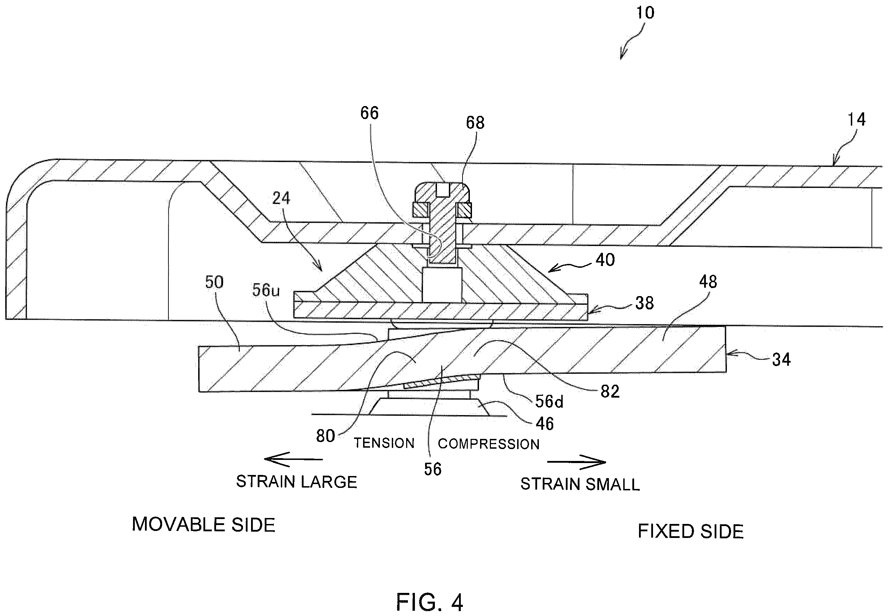

FIG. 1 is a perspective view showing a scale 10 according to a first embodiment. FIG. 2 is a partially transparent view showing a plan view of the scale 10 according to the first embodiment. FIG. 3 is a sectional view taken along line A-A in FIG. 1. FIG. 4 is an enlarged view showing a relevant portion of FIG. 3.

The scale 10 forms a weighing device for measuring body weight of a user. As shown in FIG. 1, the scale 10 is provided with a wide-rectangular case base 12 and a square case cover 14 that is arranged over the case base 12. A load from the user stepped on the case cover 14 is applied to the case cover 14.

Note that, in this embodiment, a case in which the case cover 14 has a square shape will be described; however, the present invention is not limited to this configuration. For example, the case cover 14 may have a wide-rectangular shape.

In addition, as shown in FIGs. 2 to 4, the scale 10 is provided with a first support body 20, a second support body 22, a third support body 24, and a fourth support body 26 that support the case cover 14 on the case base 12. The support bodies 20, 22, 24, and 26 are respectively arranged at four corners of the case cover 14.

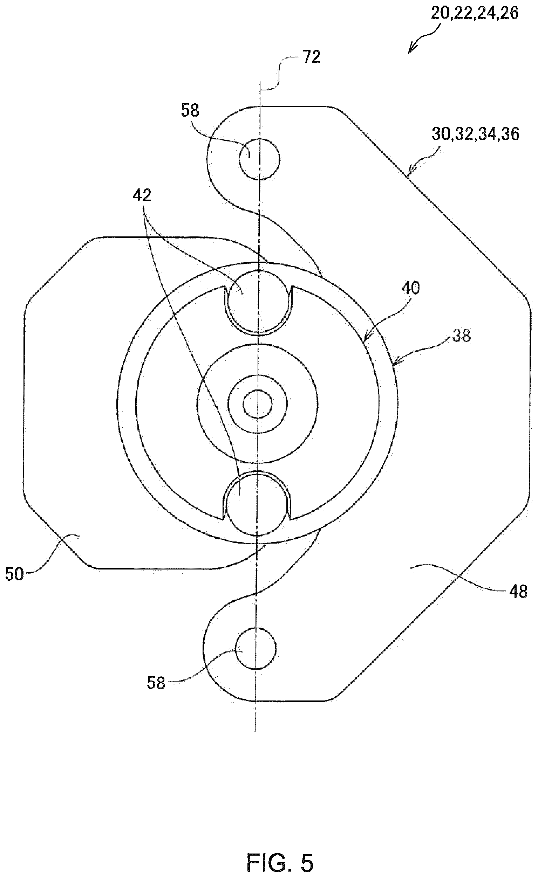

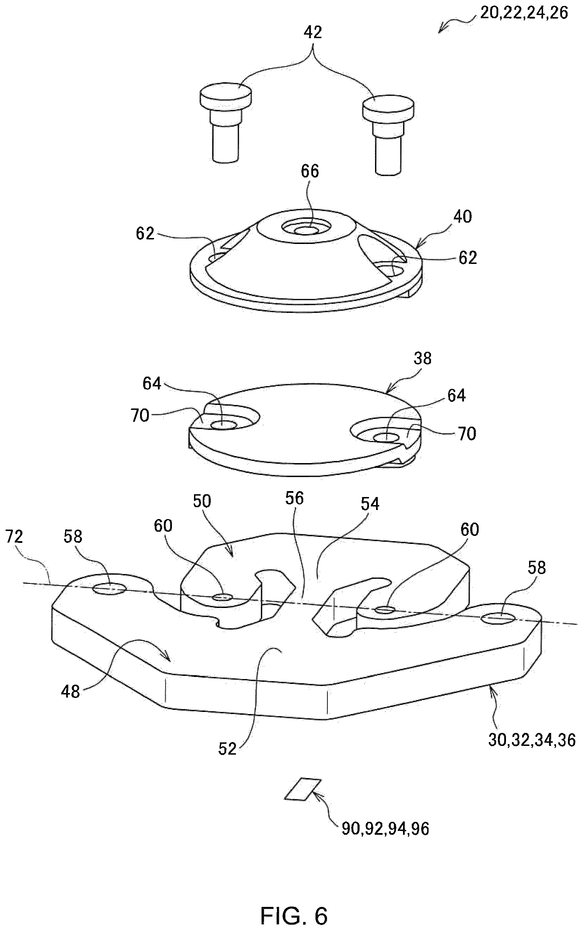

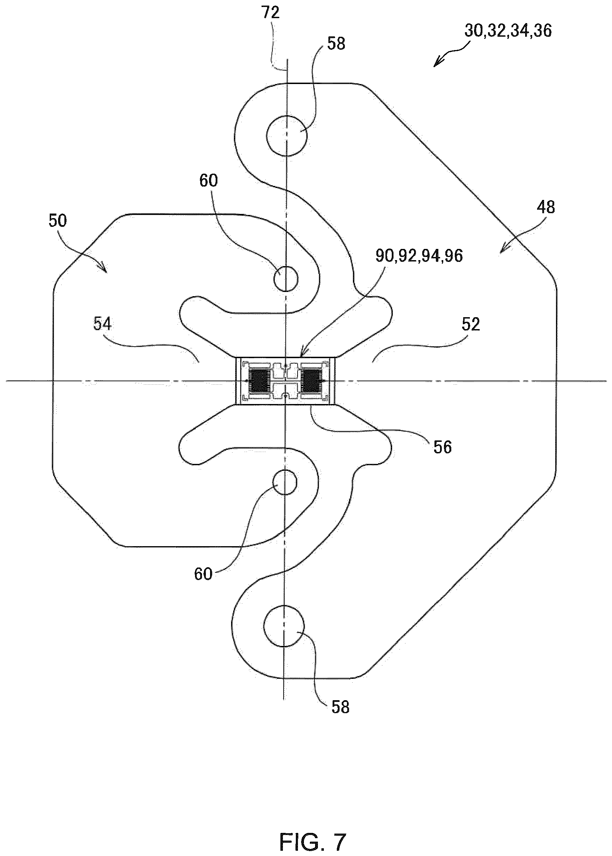

FIG. 5 is a plan view showing the support body (20, 22, 24, 26) according to the first embodiment. FIG. 6 is an exploded perspective view showing the support body (20, 22, 24, 26) according to the first embodiment. FIG. 7 is a plan view showing a strain generating body (30, 32, 34, 36) according to the first embodiment. FIG. 7 shows a state in which a strain sensor (90, 92, 94, 96), which will be described later, is provided on the strain generating body (30, 32, 34, 36).

As shown in FIGs. 5 and 6, each of the support bodies 20, 22, 24, and 26 is provided with a strain generating body (30, 32, 34, 36) that is formed of a metal plate.

Specifically, the first support body 20 is provided with the first strain generating body 30. The second support body 22 is provided with the second strain generating body 32. In addition, the third support body 24 is provided with the third strain generating body 34. The fourth support body 26 is provided with the fourth strain generating body 36.

As shown in FIG. 6, in each of the strain generating bodies 30, 32, 34, and 36, a sheet metal bridge 38 that is arranged thereon and a conical bridge rubber 40 that is arranged on the sheet metal bridge 38 are fixed by holding screws 42.

As shown in FIGs. 4 and 7, each of the strain generating bodies 30, 32, 34, and 36 has a C-shaped fixing portion 48 that is fixed to projected portions 46 formed on the case base 12. In addition, each of the strain generating bodies 30, 32, 34, and 36 has an E-shaped load receiving portion 50 that is fixed to the case cover 14 via the sheet metal bridge 38 and the bridge rubber 40.

In the above configuration, the fixing portion 48 that is fixed to the case base 12 can also be referred to as a fixing portion that forms the fixed side. In addition, the load receiving portion 50 that is fixed to the case cover 14 can also be referred to as a movable portion that forms the movable side because the load receiving portion 50 can be moved relative to the fixing portion 48.

In the respective support bodies 20, 22, 24, and 26, the fixing portions 48 of the respective strain generating bodies 30, 32, 34, and 36 are supported by the case base 12, and the load receiving portions 50 of the respective strain generating bodies 30, 32, 34, and 36 support the case cover 14. With such a configuration, the case cover 14 is supported by the case base 12 via the strain generating bodies 30, 32, 34, and 36.

As shown in FIG. 7, a lower triangle portion 52 having a triangle shape extends inwardly from the center portion of the fixing portion 48. An upper triangle portion 54 having a triangle shape extend towards the lower triangle portion 52 of the fixing portion 48 from the center portion of the load receiving portion 50. As shown in FIGs. 6 and 7, the apex of the lower triangle portion 52 and the apex of the upper triangle portion 54 are joined via a wide-rectangular strain generating part 56. The load receiving portion 50 and the fixing portion 48 are joined via the strain generating part 56.

Insertion holes 58 are formed in both end portions of the fixing portion 48. The fixing portion 48 is fixed to the projected portions 46 of the case base 12 with screws that are respectively inserted through the insertion holes 58. As shown in FIG. 6, screw holes 60 are formed in both end portions of the load receiving portion 50. The holding screws 42, which are respectively inserted through circular holes 62 of the bridge rubber 40 and through circular holes 64 of the sheet metal bridge 38, are screwed into the screw holes 60, and thereby, the sheet metal bridge 38 and the bridge rubber 40 are fixed to the load receiving portion 50.

An insert nut 66 is provided on a top surface of the bridge rubber 40. As shown in FIG. 4, a fixing screw 68, which is inserted through the case cover 14, is screwed into the insert nut 66, and thereby, the case cover 14 is supported on the load receiving portions 50 of the respective strain generating bodies 30, 32, 34, and 36.

As shown in FIG. 6, in the sheet metal bridge 38, drawing processed portions 70 are formed on outer circumference portions of the circular holes 64 so as to be recessed towards the strain generating body 30, 32, 34, 36 by performing drawing processing. The drawing processed portions 70 respectively project out towards corresponding strain generating bodies 30, 32, 34, and 36. The sheet metal bridges 38 are respectively fixed to the strain generating bodies 30, 32, 34, and 36 in a state in which the drawing processed portions 70 are in surface contact with the load receiving portions 50 of the corresponding strain generating bodies 30, 32, 34, and 36. With such a configuration, a space is ensured between the sheet metal bridge 38 and the strain generating part 56 for allowing downward movement of the case cover 14 that is supported via the bridge rubber 40.

The insertion holes 58 of the fixing portion 48, which is fixed to the case base 12, and the screw holes 60 of the load receiving portion 50, which supports the case cover 14 via the bridge rubber 40, are arranged on an imaginary line 72. The strain generating part 56 is arranged on the imaginary line 72.

The strain generating part 56 is formed to have a width dimension that is narrower than those of the fixing portion 48 and the load receiving portion 50. As the load applied to the load receiving portion 50 is concentrated on the strain generating part 56, the load receiving portion 50 is displaced downward, and the strain generating part 56 is elastically deformed due to this displacement.

The strain generating part 56 is arranged on the imaginary line 72 along which the insertion holes 58 forming fixing points to the case base 12 and the screw holes 60 forming fixing points to the case cover 14 are aligned. With such a configuration, as the load receiving portion 50 is displaced downward by receiving the load from the case cover 14, the strain generating part 56 is elastically deformed so as to form an S shape.

Specifically, as the load receiving portion 50 is displaced downward and the strain generating part 56 is elastically deformed, as shown in FIG. 4, in the strain generating part 56, a lower curved site 80, at which the strain generating part 56 is deformed into a downwardly projecting curved shape, is formed on the movable side where the load receiving portion 50 supporting the case cover 14 is provided. In addition, in the strain generating part 56, an upper curved site 82, at which the strain generating part 56 is deformed into a upwardly projecting curved shape, is formed on the fixed side where the fixing portion 48 fixed to the case base 12 is provided.

In the above, the lower curved site 80, at which the strain generating part 56 is deformed into a downwardly projecting curved shape, indicates a recessed site where the strain generating part 56 is deformed into a recessed shape. In addition, the upper curved site 82, at which the strain generating part 56 is deformed into a upwardly projecting curved shape, indicates a projected site where the strain generating part 56 is deformed into a projected shape.

As shown in FIG. 7, the strain generating part 56 is provided with the strain sensor (90, 92, 94, 96) that gives a resistance value that is changed in accordance with the tension and compression due to the elastic deformation of the strain generating part 56.

Specifically, the first strain sensor 90 is provided on the strain generating part 56 of the first strain generating body 30. The second strain sensor 92 is provided on the strain generating part 56 of the second strain generating body 32. In addition, the third strain sensor 94 is provided on the strain generating part 56 of the third strain generating body 34. The fourth strain sensor 96 is provided on the strain generating part 56 of the fourth strain generating body 36.

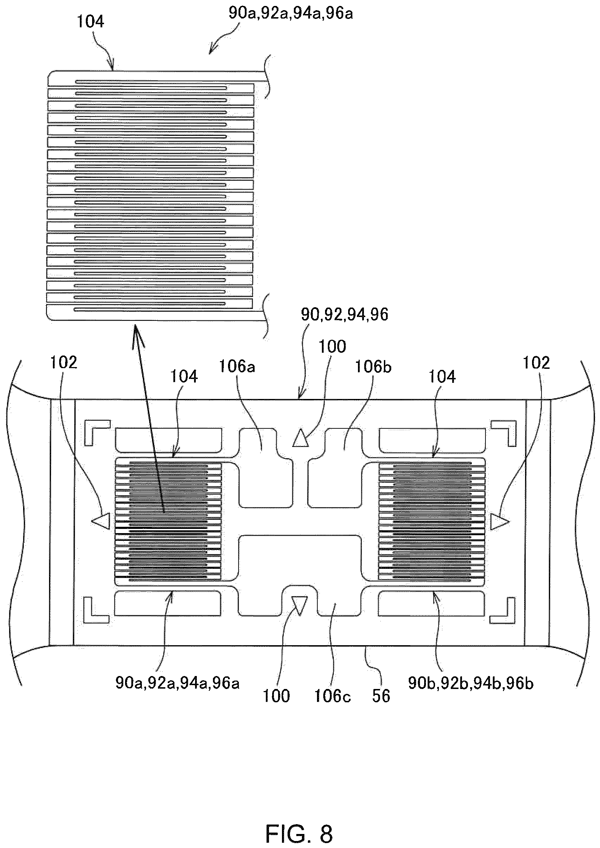

FIG. 8 is a plan view showing the strain generating part 56 of the strain generating body 30, 32, 34, 36 according to the first embodiment and the strain sensor 90, 92, 94, 96 that is provided on the strain generating part 56.

The strain sensor 90, 92, 94, 96 is formed to have a wide-rectangular shape. The strain sensor 90, 92, 94, 96 is provided with a first strain gauge 90a, 92a, 94a, 96a on one side in the longitudinal direction and is provided with a second strain gauge 90b, 92b, 94b, 96b on the other side in the longitudinal direction.

In the strain sensor 90, 92, 94, 96, a pair of lengthwise-width center marks 100 having a triangle shape are provided at the center portions in the longitudinal direction. The lengthwise-width center marks 100 are each arranged such that its apex is directed outward in the transverse direction. In addition, in the strain sensor 90, 92, 94, 96, a pair of crosswise-direction center marks 102 having a triangle shape are provided at both end portions in the longitudinal direction. The crosswise-direction center marks 102 are each arranged such that its apex is directed towards both ends.

When the strain sensor 90, 92, 94, 96 is to be fixed to the strain generating part 56, a first marking line is drawn on the strain generating part 56 so as to extend in the longitudinal direction through the center in the transverse direction, and a second marking line is drawn on the strain generating part 56 so as to extend in the transverse direction through the center in the longitudinal direction. The apexes of the lengthwise-width center marks 100 and the apexes of the crosswise-direction center marks 102 of the corresponding strain sensor 90, 92, 94, 96 are then aligned with the first marking line and the second marking line, respectively, and in this state, the strain sensor 90, 92, 94, 96 is bonded and fixed to the strain generating part 56. By doing so, the strain gauges 90a, 92a, 94a, 96a, 90b, 92b, 94b, 96b of the respective strain sensors 90, 92, 94, and 96 are arranged at predefined positions.

The strain gauges 90a, 92a, 94a, 96a, 90b, 92b, 94b, and 96b are each provided with a resistance body 104 that is folded over multiple times. In the resistance body 104, electric resistance is changed in accordance with the tension and compression.

Thus, in each of the strain gauges 90a, 92a, 94a, 96a, 90b, 92b, 94b, and 96b, the resistance value is decreased when it is subjected to a compressive force and compressed. In addition, in each of the strain gauges 90a, 92a, 94a, 96a, 90b, 92b, 94b, and 96b, the resistance value is increased when it is subjected to a tensile force and tensioned.

Each of the strain sensors 90, 92, 94, and 96 is provided with a first contact terminal 106a that is connected to a first end of the resistance body 104 forming each of the first strain gauges 90a, 92a, 94a, and 96a. In addition, each of the strain sensors 90, 92, 94, and 96 is provided with a second contact terminal 106b that is connected to a first end of the resistance body 104 forming each of the second strain gauges 90b, 92b, 94b, and 96b.

Furthermore, each of the strain sensors 90, 92, 94, and 96 is provided with a third contact terminal 106c that is connected to a second end of the resistance body 104 forming each of the first strain gauges 90a, 92a, 94a, and 96a and a second end of the resistance body 104 forming each of the second strain gauges 90b, 92b, 94b, and 96b.

Note that, each of the contact terminals 106a, 106b, and 106c can also be referred to as a solder tab.

In each of the strain sensors 90, 92, 94, and 96, in a state in which each of the strain sensors 90, 92, 94, and 96 is provided on the strain generating part 56, the first strain gauges 90a, 92a, 94a, and 96a are each arranged at the lower curved site 80, and the second strain gauges 90b, 92b, 94b, and 96b are each arranged at the upper curved site 82.

Among the respective strain generating bodies 30, 32, 34, and 36 of the support bodies 20, 22, 24, and 26 forming pairs, the strain sensors 90 and 94 of first-partner strain generating bodies 30 and 34 are respectively arranged on lower surfaces 56d of the strain generating parts 56. The strain sensors 92 and 96 of second-partner strain generating bodies 32 and 36 are respectively arranged on upper surfaces 56u of the strain generating parts 56.

In the above, the upper surface 56u of the strain generating part 56 indicates a front surface of the strain generating part 56. The lower surface 56d of the strain generating part 56 indicates a back surface of the strain generating part 56.

In other words, as shown in FIG. 2, the strain generating bodies 30, 32, 34, and 36 are respectively provided on the respective support bodies 20, 22, 24, and 26 that are arranged at the four locations of the scale 10. The strain generating bodies 30, 32, 34, and 36 are arranged at the four locations. In the first-partner strain generating bodies 30 and 34 of the mutually adjacent pairs among the strain generating bodies 30, 32, 34, and 36, the strain sensors 90 and 94 are respectively arranged on the lower surfaces 56d of the strain generating parts 56. In the second-partner strain generating bodies 32 and 36, the strain sensors 92 and 96 are respectively arranged on the upper surfaces 56u of the strain generating parts 56.

Specifically, for the first support body 20 and the fourth support body 26, which are adjacent with each other in the transverse direction of the scale 10, in the first strain generating body 30 of the first support body 20, the first strain sensor 90 is arranged on the lower surface 56d of the strain generating part 56. In the fourth strain generating body 36 of the fourth support body 26, the fourth strain sensor 96 is arranged on the upper surface 56u of the strain generating part 56.

For the second support body 22 and the third support body 24, which are adjacent with each other in the transverse direction of the scale 10, in the third strain generating body 34 of the third support body 24, the strain sensor 94 is arranged on the lower surface 56d of the strain generating part 56. In the second strain generating body 32 of the second support body 22, the second strain sensor 92 is arranged on the upper surface 56u of the strain generating part 56.

### (Circuit Configuration)

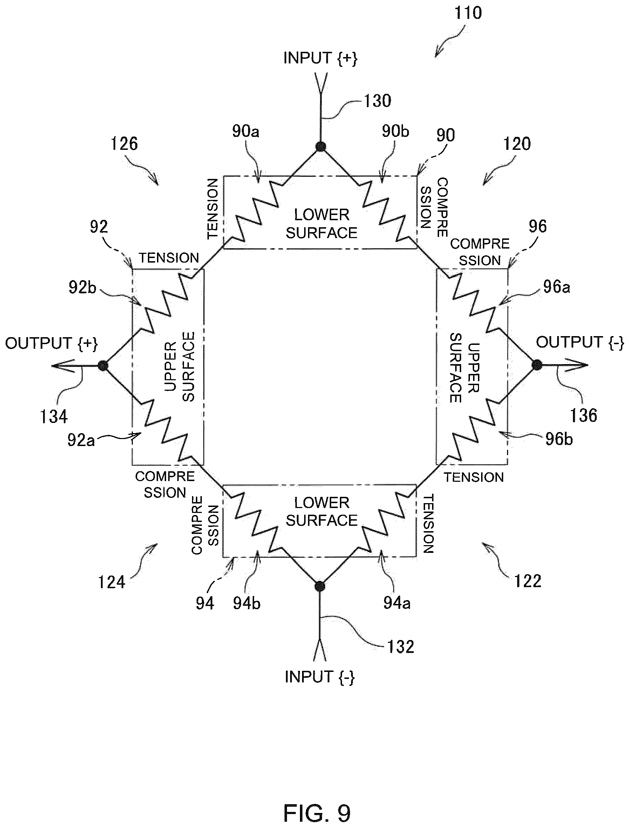

FIG. 9 is a circuit diagram showing a connection state of the respective strain gauges 90a, 92a, 94a, 96a, 90b, 92b, 94b, 96b of the strain sensors 90, 92, 94, and 96 according to the first embodiment. FIG. 9 shows a Wheatstone bridge circuit 110.

The Wheatstone bridge circuit 110 includes a first arm 120, a second arm 122, a third arm 124, and a fourth arm 126. The first arm 120 opposes to the third arm 124, and the second arm 122 opposes to the fourth arm 126.

The first arm 120 is formed of a serial-connection circuit including the second strain gauge 90b of the first strain sensor 90 that is arranged on the lower surface 56d of the upper curved site 82 of the first strain generating body 30 and the first strain gauge 96a of the fourth strain sensor 96 that is arranged on the upper surface 56u of the lower curved site 80 of the fourth strain generating body 36.

The second arm 122 is formed of the serial-connection circuit including the second strain gauge 96b of the fourth strain sensor 96 that is arranged on the upper surface 56u of the upper curved site 82 of the fourth strain generating body 36 and the first strain gauge 94a of the third strain sensor 94 that is arranged on the lower surface 56d of the lower curved site 80 of the third strain generating body 34.

The third arm 124 is formed of the serial-connection circuit including the second strain gauge 94b of the third strain sensor 94 that is arranged on the lower surface 56d of the upper curved site 82 of the third strain generating body 34 and the first strain gauge 92a of the second strain sensor 92 that is arranged on the upper surface 56u of the lower curved site 80 of the second strain generating body 32.

The fourth arm 126 is formed of the serial-connection circuit including the second strain gauge 92b of the second strain sensor 92 that is arranged on the upper surface 56u of the upper curved site 82 of the second strain generating body 32 and the first strain gauge 90a of the first strain sensor 90 that is arranged on the lower surface 56d of the lower curved site 80 of the first strain generating body 30.

A connection part between the first arm 120 and the fourth arm 126 of the Wheatstone bridge circuit 110 forms a positive input terminal 130 to which the positive electrode voltage is applied, and a connection part between the second arm 122 and the third arm 124 of the Wheatstone bridge circuit 110 forms a negative input terminal 132 to which the negative electrode voltage is applied. In addition, a connection part between the third arm 124 and the fourth arm 126 forms a positive output terminal 134 that outputs the positive electrode signal, and a connection part between the first arm 120 and the second arm 122 forms a negative output terminal 136 that outputs the negative electrode signal.

The positive output terminal 134 and the negative output terminal 136 are connected to a control device (not shown). The control device computes the load applied to the case cover 14 from an electric potential between the positive output terminal 134 and the negative output terminal 136 and displays a computation result as the body weight.

### (Wiring Diagram)

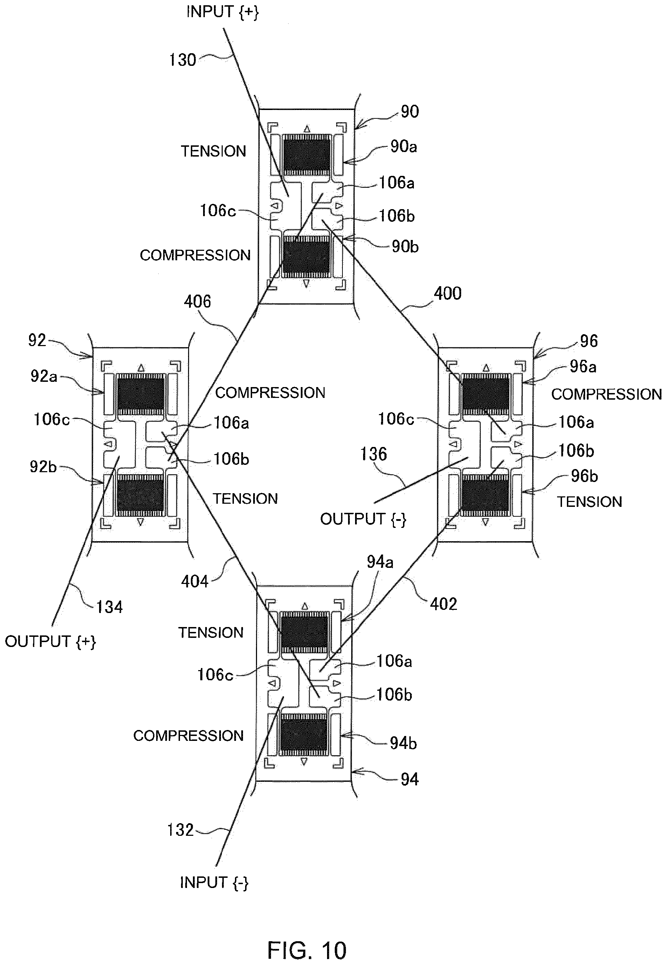

FIG. 10 is a wiring diagram showing a state in which the strain sensors 90, 92, 94, and 96 respectively provided on the strain generating bodies 30, 32, 34, and 36 according to the first embodiment are connected by wiring.

Specifically, for the wiring, the second contact terminal 106b of the first strain sensor 90 is connected to the first contact terminal 106a of the fourth strain sensor 96 via a first wiring 400. The second contact terminal 106b of the fourth strain sensor 96 is connected to the first contact terminal 106a of the third strain sensor 94 via a second wiring 402.

The second contact terminal 106b of the third strain sensor 94 is connected to the first contact terminal 106a of the second strain sensor 92 via a third wiring 404. The second contact terminal 106b of the second strain sensor 92 is connected to the first contact terminal 106a of the first strain sensor 90 via a fourth wiring 406.

The third contact terminal 106c of the first strain sensor 90 forms the positive input terminal 130, and the positive voltage is applied thereto. The third contact terminal 106c of the third strain sensor 94 forms the negative input terminal 132, and the negative voltage is applied thereto.

The third contact terminal 106c of the second strain sensor 92 forms the positive output terminal 134 and outputs the positive voltage. The third contact terminal 106c of the fourth strain sensor 96 forms the negative output terminal 136 and outputs the negative voltage.

In this embodiment, the first strain sensor 90 and the third strain sensor 94 are provided on the lower surface of the first strain generating body 30 of the first support body 20 and on the lower surface of the third strain generating body 34 of the third support body 24, respectively. In addition, although a description will be given of a case in which the second strain sensor 92 and the fourth strain sensor 96 are provided on the upper surface of the second strain generating body 32 of the second support body 22 and the upper surface of the fourth strain generating body 36 of the fourth support body 26, respectively, the present invention is not limited to this configuration.

For example, the first strain sensor 90 and the third strain sensor 94 are provided on the upper surface of the first strain generating body 30 of the first support body 20 and on the upper surface of the third strain generating body 34 of the third support body 24, respectively. The second strain sensor 92 and the fourth strain sensor 96 may be provided on the lower surface of the second strain generating body 32 of the second support body 22 and on the lower surface of the fourth strain generating body 36 of the fourth support body 26, respectively.

### (Operations and Effects)

Next, operational advantages achieved by this embodiment will be described.

The scale 10 of this embodiment is provided with the case base 12 and the case cover 14 that is arranged on the case base 12 and to which the load is applied. The scale 10 is provided with a plurality of strain generating bodies 30, 32, 34, and 36 each having the strain generating part 56 that supports the case cover 14 on the case base 12 and that is elastically deformed by receiving the load applied to the case cover 14. In addition, the scale 10 is provided with the strain sensors 90, 92, 94, and 96 that are respectively provided on the strain generating parts 56 of the respective strain generating bodies 30, 32, 34, and 36 and in which a resistance value is changed in accordance with tension and compression due to the deformation of the strain generating part 56.

The strain sensor 90, 92, 94, 96 includes the first strain gauge 90a, 92a, 94a, 96a that is arranged on the site deformed into the recessed shape in a state in which the strain generating part 56 is elastically deformed. In addition, the strain sensor 90, 92, 94, 96 includes the second strain gauge 90b, 92b, 94b, 96b that is arranged on the site deformed into the projected shape in a state in which the strain generating part 56 is elastically deformed.

The strain sensors 90, 92, 94, and 96 of the first-partner strain generating bodies 30, 32, 34, and 36 of the mutually adjacent pairs among the strain generating bodies 30, 32, 34, and 36 are arranged on the front surfaces of the strain generating parts 56. The strain sensors 90, 92, 94, and 96 of the second-partner strain generating bodies 30, 32, 34, and 36 of the mutually adjacent pairs among the strain generating bodies 30, 32, 34, and 36 are arranged on the back surfaces of the strain generating parts 56.

In addition, in this embodiment, as an example, the strain generating body includes the first strain generating body 30 on the upper surface of which the first strain sensor 90 is provided and the second strain generating body 32 that is arranged so as to be adjacent with the first strain generating body 30 and on the lower surface of which the second strain sensor 92 is provided.

In this configuration, in a case in which the deflection is caused in the case cover 14 and the input direction of the load to the respective strain generating bodies 30, 32, 34, and 36 is inclined, a strain level in one of the lower curved site 80 and the upper curved site 82 appears at a higher level. In addition, the strain level of the other of the lower curved site 80 and the upper curved site 82 appears at a lower level.

As a result, in the respective strain sensors 90, 92, 94, and 96, a balance between the tensile force and the compressive force generated in the respective strain gauges 90a, 92a, 94a, 96a, 90b, 92b, 94b, 96b is changed.

In this embodiment, among the strain generating bodies 30, 32, 34, and 36 forming the pairs,
the strain sensors 90 and 94 of the first-partner strain generating bodies 30 and 34 are respectively arranged on the lower surfaces 56d of the strain generating parts 56, and the strain sensors 92 and 96 of the second-partner strain generating bodies 32 and 36 are respectively arranged on the upper surfaces 56u of the strain generating parts 56.

In the first-partner strain generating bodies 30 and 34 in which the strain sensors 90 and 94 are respectively arranged on the lower surfaces 56d, as an example, the tensile force generated in the first strain gauges 90a and 94a that are arranged at the lower curved sites 80 is increased. In addition, the compressive force generated in the second strain gauges 90b and 94b that are arranged at the upper curved sites 82 is decreased.

On the other hand, in the second-partner strain generating bodies 32 and 36 in which the strain sensors 92 and 96 are respectively arranged on the upper surfaces 56u, the compressive force generated in the first strain gauges 92a and 96a that are arranged at the lower curved sites 80 is increased. In addition, the tensile force generated in the second strain gauges 92b and 96b that are arranged at the upper curved sites 82 is decreased.

Therefore, it is possible to suppress an influence on the output on the tension side by the combination of output from the first strain gauges 90a and 94a of the first-partner strain generating bodies 30 and 34, in which the tensile force is exerted at a higher level, and output from the second strain gauges 92b and 96b of the second-partner strain generating bodies 32 and 36, in which the tensile force is exerted at a lower level.

In addition, it is possible to suppress an influence on the output on the compression side by the combination of output from the first strain gauges 92a and 96a of the second-partner strain generating bodies 32 and 36, in which the compressive force is exerted at a higher level, and output from the second strain gauges 90b and 94b of the first-partner strain generating bodies 30 and 34, in which the compressive force is exerted at a lower level.

In the above, when the deflection is caused in the case cover 14 and the input direction of the load to the respective strain generating bodies 30, 32, 34, and 36 is inclined, differences in the strain caused in the respective strain gauges 90a, 92a, 94a, 96a, 90b, 92b, 94b, and 96b of the strain sensors 90, 92, 94, and 96 is increased. However, even in such a case, it is possible to suppress the influence on the instrumental error property.

Because the influence on the instrumental error property can be suppressed even if the deflection is caused in the case cover 14, it is possible to make the case cover 14 thinner. With such a configuration, it is possible to achieve reduction in cost and weight of the scale 10.

In addition, in this embodiment, the strain generating bodies 30, 32, 34, and 36 are respectively arranged at the four locations, and in the first-partner strain generating bodies 30 and 34 of the mutually adjacent pairs among the strain generating bodies 30, 32, 34, and 36, the strain sensors 90 and 94 are respectively arranged on the lower surfaces 56d of the strain generating bodies 30 and 34. In addition, in the second-partner strain generating bodies 32 and 36 of the mutually adjacent pairs among the strain generating bodies 30, 32, 34, and 36, the strain sensors 92 and 96 are respectively arranged on the upper surfaces 56u of the strain generating parts 56.

With such a configuration, the case cover 14 is supported in a more stable state, and at the same time, it is further possible to suppress the influence on the instrumental error property due to the deflection caused in the case cover 14.

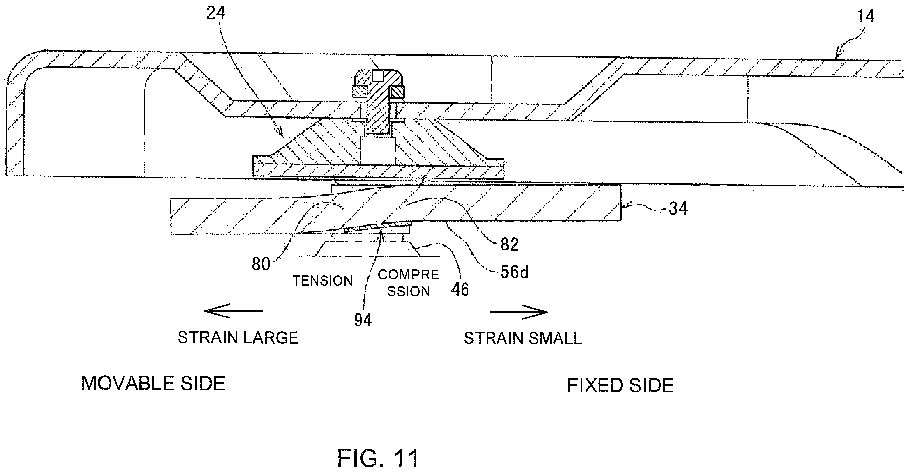

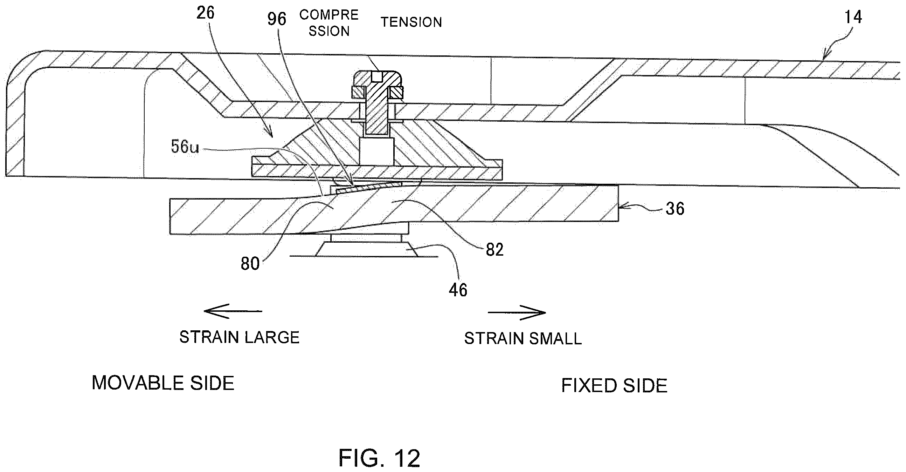

More specific description will be given with reference to FIGs. 11 and 12. FIG. 11 is a sectional view showing a state of the third strain generating body 34 of the third support body 24 when the case cover 14 according to the first embodiment is subjected to the deflection, and FIG. 12 is a sectional view showing a state of the fourth strain generating body 36 of the fourth support body 26 when the case cover 14 according to the first embodiment is subjected to the deflection. FIGs. 11 and 12 show a state in which the case cover 14 is subjected to the deflection by the applied load such that the center portion thereof is projected downward.

In this state, as shown in FIG. 11, in the third strain sensor 94 that is arranged on the lower surface 56d of the third strain generating body 34 of the third support body 24, the tensile force generated in the first strain gauge 94a that is arranged at the lower curved site 80 is increased. In addition, the compressive force generated in the second strain gauge 94b that is arranged at the upper curved site 82 is decreased.

In addition, in the first support body 20 that is arranged on the diagonal line with respect to the third support body 24, the first strain sensor 90 is arranged on the lower surface 56d of the first strain generating body 30. Therefore, similarly to the third support body 24, in the first strain sensor 90 of the first support body 20, the tensile force generated in the first strain gauge 90a that is arranged at the lower curved site 80 is increased, and the compressive force generated in the second strain gauge 90b that is arranged at the upper curved site 82 is decreased.

On the other hand, as shown in FIG. 12, in the fourth strain sensor 96 that is arranged on the upper surface 56u of the fourth strain generating body 36 of the fourth support body 26, the compressive force generated in the first strain gauge 96a that is arranged at the lower curved site 80 is increased. In addition, the tensile force generated in the second strain gauge 96b that is arranged at the upper curved site 82 is decreased.

In addition, in the second support body 22 that is arranged on the diagonal line with respect to the fourth support body 26, the second strain sensor 92 is arranged on the upper surface 56u of the second strain generating body 32. Therefore, similarly to the fourth support body 26, in the second strain sensor 92 of the second support body 22, the compressive force generated in the first strain gauge 92a that is arranged at the lower curved site 80 is increased, and the tensile force generated in the second strain gauge 92b that is arranged at the upper curved site 82 is decreased.

As shown in FIG. 9, the first arm 120 of the Wheatstone bridge circuit 110 is formed of the serial-connection circuit including the second strain gauge 90b of the first strain sensor 90, in which the compressive force is exerted at a lower level, and the first strain gauge 96a of the fourth strain sensor 96, in which the compressive force is exerted at a higher level.

In addition, the second arm 122 of the Wheatstone bridge circuit 110 is formed of the serial-connection circuit including the second strain gauge 96b of the fourth strain sensor 96, in which the tensile force is exerted at a lower level, and the first strain gauge 94a of the third strain sensor 94, in which the tensile force is exerted at a higher level.

The third arm 124 that opposes to the first arm 120 is formed of the serial-connection circuit including the second strain gauge 94b of the third strain sensor 94, in which the compressive force is exerted at a lower level, and the first strain gauge 92a of the second strain sensor 92, in which the compressive force is exerted at a higher level.

In addition, the fourth arm 126 that opposes to the second arm 122 is formed of the serial-connection circuit including the second strain gauge 92b of the second strain sensor 92, in which the tensile force is exerted at a lower level, and the first strain gauge 90a of the first strain sensor 90, in which the tensile force is exerted at a higher level.

In the above, if the input direction of the load to the respective strain generating bodies 30, 32, 34, and 36 is inclined, the differences in the strain caused in the respective strain gauges 90a, 92a, 94a, 96a, 90b, 92b, 94b, and 96b of the strain sensors 90, 92, 94, and 96 are increased. Even in such a case, it is possible to suppress influences on resistance values of the respective arms 120, 122, 124, and 126. Thus, it is possible to maintain a balance of a potential difference in the Wheatstone bridge circuit 110.

As described above, by combining the respective strain gauges 90a and 94a, in which the tensile force is exerted at a higher level, and the strain gauges 92b and 96b, in which the tensile force is exerted at a lower level, it is possible to suppress the influences on the tension side. In addition, by combining the respective strain gauges 92a and 96a, in which the compressive force is exerted at a higher level, and the strain gauges 90b and 94b, in which the compressive force is exerted at a lower level, it is possible to suppress the influences on the compression side.

Therefore, even if the differences in the strain caused in the respective strain gauges 90a, 92a, 94a, 96a, 90b, 92b, 94b, and 96b of the strain sensors 90, 92, 94, and 96 is increased due to the deflection caused in the case cover 14, it is possible to suppress the influence on the instrumental error property.

In addition, in this embodiment, the strain sensor (90, 92, 94, 96) is provided with the first contact terminal 106a that is connected to the first end of the first strain gauge 90a, 92a, 94a, 96a and the second contact terminal 106b that is connected to the first end of the second strain gauge 90b, 92b, 94b, 96b. In addition, the strain sensor (90, 92, 94, 96) is provided with the third contact terminal 106c that is connected to the second end of the first strain gauge 90a, 92a, 94a, 96a and the second end of the second strain gauge 90b, 92b, 94b, 96b.

According to such a configuration, there is no need to connect the second end of the first strain gauge 90a, 92a, 94a, 96a to the second end of the second strain gauge 90b, 92b, 94b, 96b by the wiring, and therefore, wiring operation becomes easier.

Note that, in this embodiment, although the description has been given for the scale 10 that is provided with the strain generating bodies 30, 32, 34, and 36, which respectively support the four corners of the case cover 14, the present invention is not limited to this configuration, and the strain generating bodies that support the case cover 14 and that detect the load may be provided at at least two locations.

### < Second Embodiment

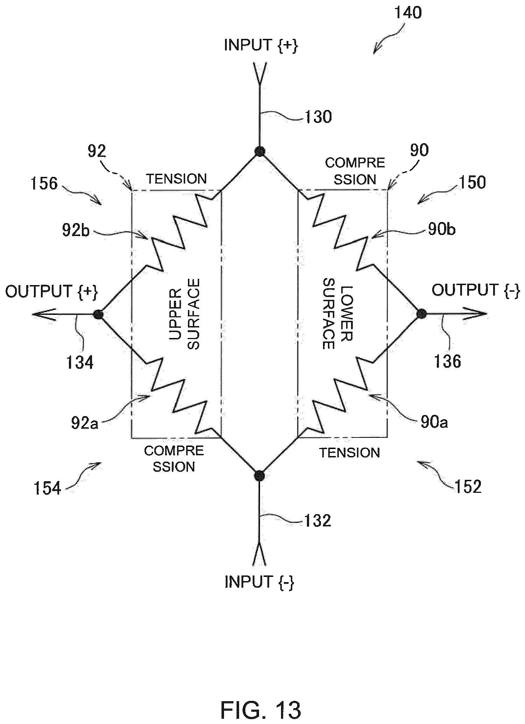

FIG. 13 is a circuit diagram showing the connection state of the strain sensors 90 and 92 according to a second embodiment. FIG. 13 shows a Wheatstone bridge circuit 140. The scale 10 according to the second embodiment differs from that of the first embodiment in that the strain generating bodies that support the case cover 14 and that detect the load are formed of the first strain generating body 30 and the second strain generating body 32. Components that are the same as or similar to those in the first embodiment will be assigned the same reference numerals, and a description thereof shall be omitted.

As shown in FIG. 13, a first arm 150 of the Wheatstone bridge circuit 140 is formed of the second strain gauge 90b of the first strain sensor 90, in which the compressive force is exerted at a lower level. In addition, a second arm 152 of the Wheatstone bridge circuit 140 is formed of the first strain gauge 90a of the first strain sensor 90, in which the tensile force is exerted at a higher level.

A third arm 154 that opposes to the first arm 150 is formed of the first strain gauge 92a of the second strain sensor 92, in which the compressive force is exerted at a higher level. A fourth arm 156 that opposes to the second arm 152 is formed of the second strain gauge 92b of the second strain sensor 92, in which the tensile force is exerted at a lower level.

A connection part between the first arm 150 and the fourth arm 156 of the Wheatstone bridge circuit 140 forms the positive input terminal 130 to which the positive voltage is applied, and a connection part between the second arm 152 and the third arm 154 of the Wheatstone bridge circuit 140 forms the negative input terminal 132 to which the negative voltage is applied. In addition, a connection part between the third arm 154 and the fourth arm 156 forms the positive output terminal 134 that outputs the positive voltage, and a connection part between the first arm 150 and the second arm 152 forms the negative output terminal 136 that outputs the negative voltage.

The positive output terminal 134 and the negative output terminal 136 are connected to the control device (not shown). The control device computes the load applied to the case cover 14 from an electric potential between the positive output terminal 134 and the negative output terminal 136 and displays a computation result as the body weight.

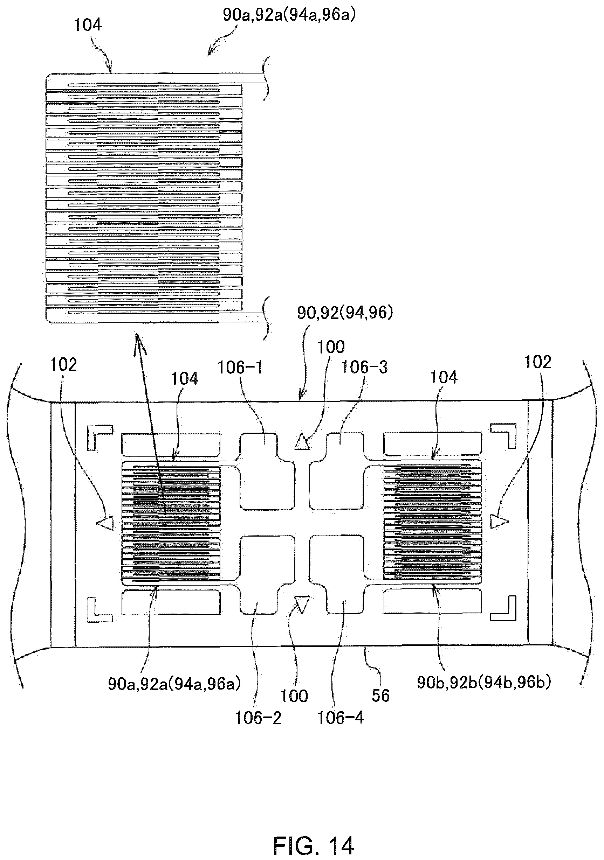

FIG. 14 is a plan view showing the strain generating part 56 of each of the strain generating bodies 30 and 32 (34 and 36) according to the second embodiment and the strain sensor 90, 92 (94, 96) that is provided on the strain generating part 56. In the strain sensors 90 and 92 (94 and 96), the number of the contact terminals is different compared with the strain sensors 90, 92, 94, and 96 that are used in the first embodiment.

The strain sensors 90 and 92 (94 and 96) are used in each of the second and following embodiments. Therefore, the reference numerals that are not used in the second embodiment are described in brackets.

The strain sensor 90, 92 (94, 96) is provided with a first contact terminal 106-1 that is connected to the first end of the resistance body 104 that forms the first strain gauge 90a, 92a (94a, 96a). In addition, the strain sensor 90, 92 (94, 96) is provided with a second contact terminal 106-2 that is connected to the second end of the resistance body 104 that forms the first strain gauge 90a, 92a (94a, 96a).

Furthermore, the strain sensor 90, 92 (94, 96) is provided with a third contact terminal 106-3 that is connected to the first end of the resistance body 104 that forms the second strain gauge 90b, 92b (94b, 96b). In addition, the strain sensor 90, 92 (94, 96) is provided with a fourth contact terminal 106-4 that is connected to the second end of the resistance body 104 that forms the second strain gauge 90b, 92b (94b, 96b).

Note that, in this embodiment, although a description is given of a case in which the first strain sensor 90 is provided on the upper surface 56u of the first strain generating body 30, and the second strain sensor 92 is provided on the lower surface 56d of the second strain generating body 32, the present embodiment is not limited to this configuration. For example, the first strain sensor 90 may be provided on the lower surface 56d of the first strain generating body 30, and the second strain sensor 92 may be provided on the upper surface 56u of the second strain generating body 32.

### (Operations and Effects)

In this embodiment, description will be given for the combination of the first arm 150 and the third arm 154 and the combination of the second arm 152 and the fourth arm 156 that influence the output from the positive output terminal 134 and the negative output terminal 136 in the Wheatstone bridge circuit 140.

The first arm 150 and the third arm 154 are formed of the combination of the second strain gauge 90b of the first strain sensor 90, in which the compressive force is exerted at a lower level, and the first strain gauge 92a of the second strain sensor 92, in which the compressive force is exerted at a higher level. In addition, the second arm 152 and the fourth arm 156 are formed of the combination of the first strain gauge 90a of the first strain sensor 90, in which the tensile force is exerted at a higher level, and the second strain gauge 92b of the second strain sensor 92, in which the tensile force is exerted at a lower level.

In the above, if the input direction of the load to the respective strain generating bodies 30 and 32 is inclined, the differences in the strain caused in the respective strain gauges 90a, 90b, 92a, and 92b of the strain sensors 90 and 92 provided on the strain generating bodies 30, 32 is increased. Even in such a case, it is possible to suppress the influence on the output from the positive output terminal 134 and the negative output terminal 136.

Therefore, even if the input direction of the load to the strain generating bodies 30 and 32 is inclined due to the deflection caused in the case cover 14 and the differences in the strain caused in the respective strain gauges 90a, 90b, 92a, and 92b of the strain sensors 90 and 92 is increased, it is possible to suppress the influence on the instrumental error property.

In addition, in this embodiment, the strain sensor (90, 92) is provided with the first contact terminal 106-1 that is connected to the first end of the first strain gauge 90a, 92a (94a, 96a) and the second contact terminal 106-2 that is connected to the second end of the first strain gauge 90a, 92a (94a, 96a). In addition, the strain sensor (90, 92) is provided with the third contact terminal 106-3 that is connected to the first end of the second strain gauge 90b, 92b (94b, 96b) and the fourth contact terminal 106-4 that is connected to the second end of the second strain gauge 90b, 92b (94b, 96b).

According to such a configuration, because the wiring can be respectively connected to the contact terminals 106-1, 106-2, 106-3, and 106-4 of the strain gauges 90a, 92a (94a, 96a), 90b, 92b (94b, 96b), it is possible to increase a degree of freedom of the circuit configuration.

### <Third Embodiment>

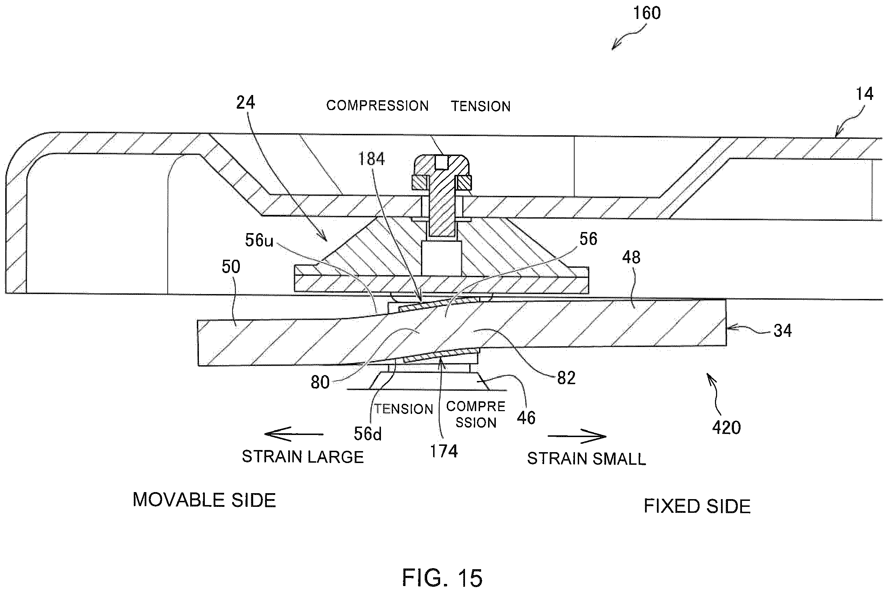

FIG. 15 is a sectional view showing a relevant portion of a scale 160 according to a third embodiment. FIG. 15 shows the strain generating body according to the third embodiment. In this third embodiment, components that are the same as or similar to those in the first embodiment will be assigned the same reference numerals, and a description thereof shall be omitted. Description will be given of components that are different from those in the first embodiment.

Strain sensor (170, 180) includes a first lower strain sensor 170 that is arranged on the lower surface 56d of the strain generating part 56 of the first strain generating body 30 and a first upper strain sensor 180 that is arranged on the upper surface 56u of the first strain generating body 30. Strain sensor (172, 182) includes a second lower strain sensor 172 that is arranged on the lower surface 56d of the strain generating part 56 of the second strain generating body 32 and a second upper strain sensor 182 that is arranged on the upper surface 56u of the second strain generating body 32.

Similarly to the first embodiment, each of the strain generating bodies 30, 32, 34, and 36 according to the third embodiment is provided with the load receiving portion 50 and the fixing portion 48 (only the third strain generating body 34 is shown in FIG. 15). In addition, each of the strain generating bodies 30, 32, 34, and 36 is provided with the strain generating part 56 with which the load receiving portion 50 is joined with the fixing portion 48 and that is elastically deformed along with the downward displacement of the load receiving portion 50. In addition, each of the strain generating bodies 30, 32, 34, and 36 is provided with the strain sensor (170, 172, 174, 176, 180, 182, 184, 186) that is provided on the strain generating part 56 and that gives a resistance value varied in accordance with the tension and compression due to the elastic deformation of the strain generating part 56.

In the above, the first lower strain sensor 170 that is arranged on the lower surface 56d of the strain generating part 56 of the first strain generating body 30 indicates the first back surface strain sensor that is arranged on the back surface of the strain generating part 56 of the first strain generating body 30. The first upper strain sensor 180 that is arranged on the upper surface 56u of the first strain generating body 30 indicates the first front surface strain sensor that is arranged on the front surface of the first strain generating body 30.

In addition, the second lower strain sensor 172 that is arranged on the lower surface 56d of the strain generating part 56 of the second strain generating body 32 indicates the second back surface strain sensor that is arranged on the back surface of the strain generating part 56 of the second strain generating body 32. The second upper strain sensor 182 that is arranged on the upper surface 56u of the second strain generating body 32 indicates the second front surface strain sensor that is arranged on the front surface of the second strain generating body 32.

In addition, the strain sensor (174, 184) includes the third lower strain sensor 174 that is arranged on the lower surface 56d of the strain generating part 56 of the third strain generating body 34 and the third upper strain sensor 184 that is arranged on the upper surface 56u of the third strain generating body 34. The strain sensor (176, 186) includes the fourth lower strain sensor 176 that is arranged on the lower surface 56d of the strain generating part 56 of the fourth strain generating body 36 and the fourth upper strain sensor 186 that is arranged on the upper surface 56u of the fourth strain generating body 36.

In the above, the third lower strain sensor 174 that is arranged on the lower surface 56d of the strain generating part 56 of the third strain generating body 34 indicates the third back surface strain sensor that is arranged on the back surface of the strain generating part 56 of the third strain generating body 34. The third upper strain sensor 184 that is arranged on the upper surface 56u of the third strain generating body 34 indicates the third front surface strain sensor that is arranged on the front surface of the third strain generating body 34.

In addition, the fourth lower strain sensor 176 that is arranged on the lower surface 56d of the strain generating part 56 of the fourth strain generating body 36 indicates the fourth back surface strain sensor that is arranged on the back surface of the strain generating part 56 of the fourth strain generating body 36. The fourth upper strain sensor 186 that is arranged on the upper surface 56u of the fourth strain generating body 36 indicates the fourth front surface strain sensor that is arranged on the front surface of the fourth strain generating body 36.

The strain sensor 170, 172, 174, 176, 180, 182, 184, 186 has the first strain gauge 170a, 172a, 174a, 176a, 180a, 182a, 184a, 186a that is arranged on the lower curved site 80 of the strain generating part 56. In addition, the strain sensor 170, 172, 174, 176, 180, 182, 184, 186 has the second strain gauge 170b, 172b, 174b, 176b, 180b, 182b, 184b, 186b arranged on the upper curved site 82 (see FIG. 8).

When the strain sensor 170, 172, 174, 176, 180, 182, 184, 186 is to be fixed to the strain generating part 56, the apexes of the lengthwise-width center marks 100 of the strain sensor 170, 172, 174, 176, 180, 182, 184, 186 are aligned with the first marking line of the strain generating part 56. In addition, the apexes of the crosswise-direction center marks 102 are aligned with the second marking line of the strain generating part 56. In this state, the strain sensor 170, 172, 174, 176, 180, 182, 184, 186 is fixed to the strain generating part 56.

By doing so, the strain gauge 170a, 172a, 174a, 176a of the lower strain sensor 170, 172, 174, 176 and the strain gauge 180a, 182a, 184a, 186a of the upper strain sensor 180, 182, 184, 186 are respectively arranged at the mutually corresponding sites.

The scale 160 according to the third embodiment is provided with the above-described strain generating bodies 30, 32, 34, and 36 and the case cover 14 that is supported by the load receiving portions 50 of the strain generating bodies 30, 32, 34, and 36. In addition, the scale 160 according to the third embodiment is provided with the case base 12 that supports the fixing portions 48 of the strain generating bodies 30, 32, 34, and 36.

Similarly to the first embodiment, the case cover 14 has a rectangular shape. The case cover 14 is supported by the respective support bodies 20, 22, 24, and 26 at the four corners. The support bodies 20, 22, 24, and 26 are respectively provided with the above-described strain generating bodies 30, 32, 34, and 36. With such a configuration, the strain generating bodies 30, 32, 34, and 36 are respectively arranged on the four corners of the case cover 14.

### (Circuit Configuration)

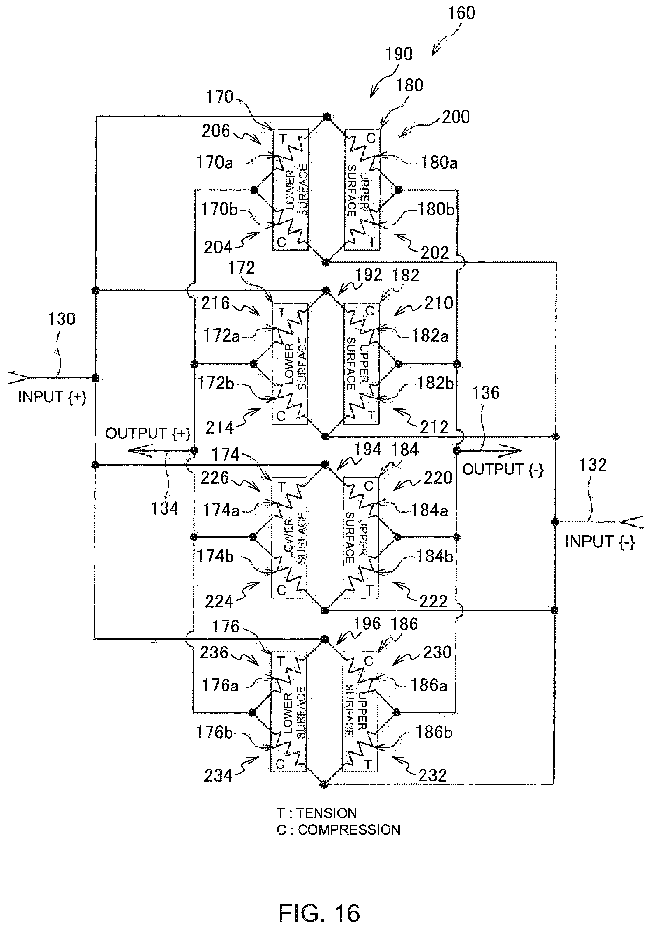

FIG. 16 is a circuit diagram showing the connection state of the strain gauges of the strain sensors 170, 172, 174, 176, 180, 182, 184, and 186 according to the third embodiment.

In this circuit diagram, a first Wheatstone bridge circuit 190, a second Wheatstone bridge circuit 192, a third Wheatstone bridge circuit 194, and a fourth Wheatstone bridge circuit 196 are connected in parallel.

The first Wheatstone bridge circuit 190 is formed of the first lower strain sensor 170 that is arranged on the lower surface 56d of the first strain generating body 30 and the first upper strain sensor 180 that is arranged on the upper surface 56u of the first strain generating body 30.

A first arm 200 of the first Wheatstone bridge circuit 190 is formed of a first strain gauge 180a of the first upper strain sensor 180, in which the compressive force is exerted at a higher level. A second arm 202 of the first Wheatstone bridge circuit 190 is formed of a second strain gauge 180b of the first upper strain sensor 180, in which the tensile force is exerted at a lower level.

A third arm 204 that opposes to the first arm 200 is formed of the second strain gauge 170b of the first lower strain sensor 170, in which the compressive force is exerted at a lower level. A fourth arm 206 that opposes to the second arm 202 is formed of the first strain gauge 170a of the first lower strain sensor 170, in which the tensile force is exerted at a higher level.

A connection part between the first arm 200 and the fourth arm 206 of the first Wheatstone bridge circuit 190 is connected to the positive input terminal 130 to which the positive voltage is applied, and a connection part between the second arm 202 and the third arm 204 of the first Wheatstone bridge circuit 190 is connected to the negative input terminal 132 to which the negative voltage is applied. In addition, a connection part between the third arm 204 and the fourth arm 206 is connected to the positive output terminal 134 that outputs the positive voltage, and the connection part between the first arm 200 and the second arm 202 is connected to the negative output terminal 136 that outputs the negative voltage.

The second Wheatstone bridge circuit 192 is formed of the second lower strain sensor 172 that is arranged on the lower surface 56d of the second strain generating body 32 and the second upper strain sensor 182 that is arranged on the upper surface 56u of the second strain generating body 32.

A first arm 210 of the second Wheatstone bridge circuit 192 is formed of the first strain gauge 182a of the second upper strain sensor 182, in which the compressive force is exerted at a higher level. A second arm 212 of the second Wheatstone bridge circuit 192 is formed of the second strain gauge 182b of the second upper strain sensor 182, in which the tensile force is exerted at a lower level. A third arm 214 that opposes to the first arm 210 is formed of the second strain gauge 172b of the second lower strain sensor 172, in which the compressive force is exerted at a lower level, and a fourth arm 216 that opposes to the second arm 212 is formed of the first strain gauge 172a of the second lower strain sensor 172, in which the tensile force is exerted at a higher level.

The connection part between the first arm 210 and the fourth arm 216 of the second Wheatstone bridge circuit 192 is connected to the positive input terminal 130, and the connection part between the second arm 212 and the third arm 214 of the second Wheatstone bridge circuit 192 is connected to the negative input terminal 132. In addition, the connection part between the third arm 214 and the fourth arm 216 is connected to the positive output terminal 134, and the connection part between the first arm 210 and the second arm 212 is connected to the negative output terminal 136.

The third Wheatstone bridge circuit 194 is formed of the third lower strain sensor 174 that is arranged on the lower surface 56d of the third strain generating body 34 and the third upper strain sensor 184 that is arranged on the upper surface 56u of the third strain generating body 34.

A first arm 220 of the third Wheatstone bridge circuit 194 is formed of the first strain gauge 184a of the third upper strain sensor 184, in which the compressive force is exerted at a higher level. A second arm 222 of the third Wheatstone bridge circuit 194 is formed of the second strain gauge 184b of the third upper strain sensor 184, in which the tensile force is exerted at a lower level.

A third arm 224 that opposes to the first arm 220 is formed of the second strain gauge 174b of the third lower strain sensor 174, in which the compressive force is exerted at a lower level, and a fourth arm 226 that opposes to the second arm 222 is formed of the first strain gauge 174a of the third lower strain sensor 174, in which the tensile force is exerted at a higher level.

A connection part between the first arm 220 and the fourth arm 226 of the third Wheatstone bridge circuit 194 is connected to the positive input terminal 130, and a connection part between the second arm 222 and the third arm 224 of the third Wheatstone bridge circuit 194 is connected to the negative input terminal 132. In addition, a connection part between the third arm 224 and the fourth arm 226 is connected to the positive output terminal 134, and a connection part between the first arm 220 and the second arm 222 is connected to the negative output terminal 136.

The fourth Wheatstone bridge circuit 196 is formed of the fourth lower strain sensor 176 that is arranged on the lower surface 56d of the fourth strain generating body 36 and the fourth upper strain sensor 186 that is arranged on the upper surface 56u of the fourth strain generating body 36.

A first arm 230 of the fourth Wheatstone bridge circuit 196 is formed of the first strain gauge 186a of the fourth upper strain sensor 186, in which the compressive force is exerted at a higher level. A second arm 232 of the fourth Wheatstone bridge circuit 196 is formed of the second strain gauge 186b of the fourth upper strain sensor 186, in which the tensile force is exerted at a lower level.

A third arm 234 that opposes to the first arm 230 is formed of the second strain gauge 176b of the fourth lower strain sensor 176, in which the compressive force is exerted at a lower level. A fourth arm 236 that opposes to the second arm 232 is formed of the first strain gauge 176a of the fourth lower strain sensor 176, in which the tensile force is exerted at a higher level.

A connection part between the first arm 230 and the fourth arm 236 of the fourth Wheatstone bridge circuit 196 is connected to the positive input terminal 130, and a connection part between the second arm 232 and the third arm 234 of the fourth Wheatstone bridge circuit 196 is connected to the negative input terminal 132. In addition, a connection part between third arm 234 and the fourth arm 236 is connected to the positive output terminal 134, and a connection part between the first arm 230 and the second arm 232 is connected to the negative output terminal 136.

The positive output terminal 134 and the negative output terminal 136 are connected to the control device (not shown). The control device computes the load applied to the case cover 14 from an electric potential between the positive output terminal 134 and the negative output terminal 136 and displays a computation result as the body weight.

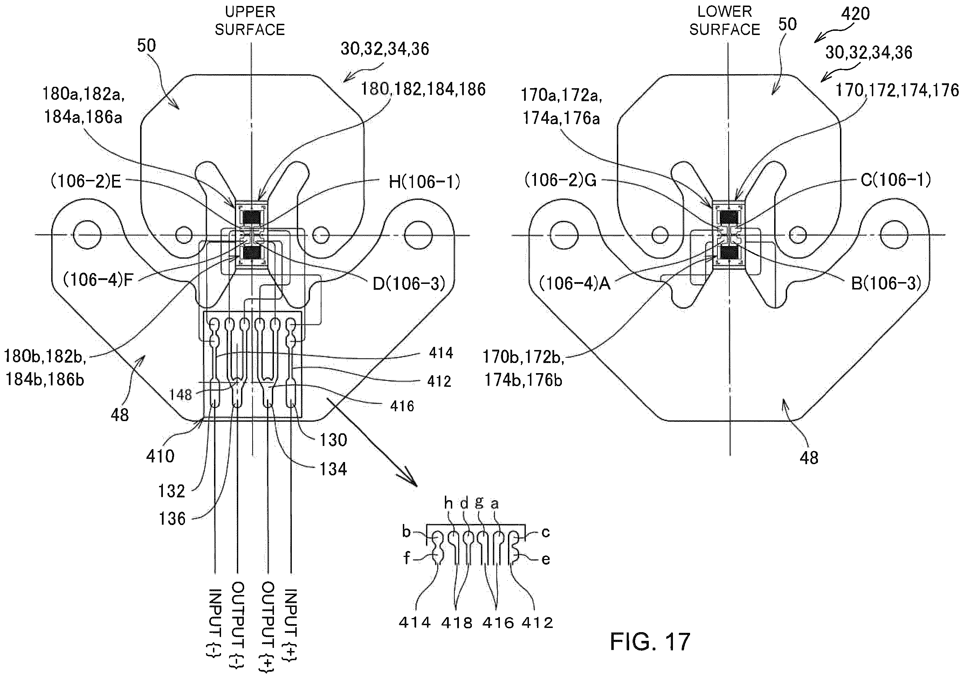

FIG. 17 is a wiring diagram showing an example of a sate in which the strain gauges 170a, 172a, 170b, 172b, 180a, 182a, 180b, and 182b respectively provided on the strain generating bodies 30, 32, 34, and 36 according to the third embodiment are connected by the wiring.

As shown in FIG. 17, the upper surfaces of the strain generating bodies 30, 32, 34, and 36 are respectively provided with a circuit board 410. The circuit board 410 is formed with a first wiring pattern 412 having the positive input terminal 130 on one end and a second wiring pattern 414 having the negative input terminal 132 on one end. In addition, the circuit board 410 is formed with a third wiring pattern 416 having the positive output terminal 134 on one end and a fourth wiring pattern 418 having the negative output terminal 136 on one end.

A land c and a land e are formed on the other end portion of the first wiring pattern 412. A land b and a land f are formed on the other end portion of the second wiring pattern 414.

The other end portion of the third wiring pattern 416 is split into two parts. A land a is formed on an end portion of one of the two parts, and a land g is formed on an end portion of the other of the two parts. The other end portion of the fourth wiring pattern 418 s split into two parts. A land d is formed on an end portion of one of the two parts, and a land h is formed on an end portion of the other of the two parts.

The land c of the first wiring pattern 412 is connected to the first contact terminal 106-1 of the corresponding lower strain sensor 170, 172, 174, 176 that is provided on the lower surface of the strain generating body 30, 32, 34, 36. In addition, the land e of the first wiring pattern 412 is connected to the second contact terminal 106-2 of the corresponding upper strain sensor 180, 182, 184, 186 that is provided on the upper surface of the strain generating body 30, 32, 34, 36.

The land b of the second wiring pattern 414 is connected to the third contact terminal 106-3 of the corresponding lower strain sensor 170, 172, 174, 176 that is provided on the lower surface of the strain generating body 30, 32, 34, 36. In addition, the land f of the second wiring pattern 414 is connected to the fourth contact terminal 106-4 of the corresponding upper strain sensor 180, 182, 184, 186 that is provided on the upper surface of the strain generating body 30, 32, 34, 36.

The land a of the third wiring pattern 416 is connected to the fourth contact terminal 106-4 of the corresponding lower strain sensor 170, 172, 174, 176 that is provided on the lower surface of the strain generating body 30, 32, 34, 36. In addition, the land g of the third wiring pattern 416 is connected to the second contact terminal 106-2 of the corresponding lower strain sensor 170, 172, 174, 176 that is provided on the lower surface of the strain generating body 30, 32, 34, 36.

The land d of the fourth wiring pattern 418 is connected to the third contact terminal 106-3 of the corresponding upper strain sensor 180, 182, 184, 186 that is provided on the upper surface of the strain generating body 30, 32, 34, 36. In addition, the land h of the fourth wiring pattern 418 is connected to the first contact terminal 106-1 of the corresponding upper strain sensor 180, 182, 184, 186 that is provided on the upper surface of the strain generating body 30, 32, 34, 36.

As described above, the circuit board 410 is connected to the respective contact terminals 106-1, 106-2, 106-3, and 106-4 of the strain sensors 170, 172, 174, 176, 180, 182, 184, 186 by the wiring. With such a configuration, the respective Wheatstone bridge circuits 190, 192, 194, and 196 are formed.

Each of the strain generating bodies 30, 32, 34, and 36 is provided with the strain gauges 170a to 176a, 170b to 176b, 180a to 186a, and 180b to 186b and the wiring forming the Wheatstone bridge circuits 190, 192, 194, 196. A load cell 420 is formed of the strain generating bodies 30, 32, 34, and 36, the strain gauges 170a to 176a, 170b to 176b, 180a to 186a, and 180b to 186b, and the above-described wiring.

Although the description has been given of a case in which the configurations in which the respective Wheatstone bridge circuits 190, 192, 194, and 196 are formed by using the circuit board 410 is applied to this embodiment, the present invention is not limited to this configuration. The configuration in which the respective Wheatstone bridge circuits 190 and 192 are formed by using the circuit board 410 may also be applied to a fourth embodiment, for example.

Note that, in this embodiment, each of the Wheatstone bridge circuits 190, 192, 194, and 196 is formed as described below.

In other words, the first arms 200, 210, 220, and 230 and the second arms 202, 212, 222, and 232 are respectively formed by using the strain gauges 180a, 182a, 184a, 186a, 180b, 182b, 184b, and 186b of the upper strain sensors 180, 182, 184, and 186. The third arms 204, 214, 224, and 234 and the fourth arms 206, 216, 226, and 236 are respectively formed by using the strain gauges 170a, 172a, 174a, 176a, 170b, 172b, 174b, and 176b of the lower strain sensors 170, 172, 174, and 176. However, this embodiment is not limited to this configuration.

For example, the first arms 200, 210, 220, and 230 and the second arms 202, 212, 222, and 232 are respectively formed by using the strain gauges 170a, 172a, 174a, 176a, 170b, 172b, 174b, and 176b of the lower strain sensors 170, 172, 174, and 176. In addition, the third arms 204, 214, 224, and 234 and the fourth arms 206, 216, 226, and 236 may respectively be formed by using the strain gauges 180a, 182a, 184a, 186a, 180b, 182b, 184b, and 186b of the upper strain sensors 180, 182, 184, and 186.

In addition, in this embodiment, although the description has been given of a case in which an average value circuit for obtaining an average value is formed by connecting the Wheatstone bridge circuits 190, 192, 194, and 196 in parallel, the present invention is not limited to this configuration. For example, it may be possible to form a configuration such that the output from the Wheatstone bridge circuits 190, 192, 194, and 196 is added.

### (Operations and Effects)

Each of the strain generating bodies 30, 32, 34, and 36 in this embodiment is provided with the load receiving portion 50 that receives the load and the fixing portion 48 that is fixed to an attachment target. In addition, each of the strain generating bodies 30, 32, 34, and 36 is provided with the strain generating part 56 with which the load receiving portion 50 is joined with the fixing portion 48 and that is elastically deformed along with the downward displacement of the load receiving portion 50. Furthermore, each of the strain generating bodies 30, 32, 34, and 36 is provided with the strain sensor (170, 172, 174, 176, 180, 182, 184, 186) that is provided on the strain generating part 56 and that gives a resistance value varied in accordance with the tension and compression due to the elastic deformation of the strain generating part 56.

The strain sensor 170, 172, 174, 176, 180, 182, 184, 186 has the first strain gauge 170a, 172a, 174a, 176a, 180a, 182a, 184a, 186a that is arranged on the lower curved site 80. In addition, the strain sensor 170, 172, 174, 176, 180, 182, 184, 186 has the second strain gauge 170b, 172b, 174b, 176b, 180b, 182b, 184b, 186b that is provided on the upper curved site 82.

In addition, the strain sensor 170, 172, 174, 176, 180, 182, 184, 186 has the lower strain sensor 170, 172, 174, 176 that is provided on the lower surface 56d of the strain generating part 56. In addition, the strain sensor 170, 172, 174, 176, 180, 182, 184, 186 has the upper strain sensor 180, 182, 184, 186 that is provided on the upper surface 56u of the strain generating part 56.

In the strain generating body 30, 32, 34, 36 having such a configuration, the lower strain sensor 170, 172, 174, 176 is arranged on the lower surface 56d of the strain generating part 56. The upper strain sensor 180, 182, 184, 186 is arranged on the upper surface 56u of the strain generating body 30, 32, 34, 36.

In addition, the strain sensor 170, 172, 174, 176, 180, 182, 184, 186 has the first strain gauge 170a, 172a, 174a, 176a, 180a, 182a, 184a, 186a that is arranged on the lower curved site 80. In addition, the strain sensor 170, 172, 174, 176, 180, 182, 184, 186 has the second strain gauge 170b, 172b, 174b, 176b, 180b, 182b, 184b, 186b that is arranged on the upper curved site 82.

In the above, in a case in which the input direction of the load to the respective strain generating bodies 30, 32, 34, and 36 is inclined, among the lower curved site 80, which is deformed into the downwardly projecting curved shape, and the upper curved site 82, which is deformed into the upwardly projecting curved shape, the strain level appears at a higher level in one of the sites, and the strain level appears at a lower level in the other of the sites. As a result, the balance between the tensile force and the compressive force generated in the strain gauge 170a, 172a, 174a, 176a, 180a, 182a, 184a, and 186a, 170b, 172b, 174b, 176b, 180b, 182b, 184b, 186b of the strain sensor is changed.

Thus, by the combination of the output from the strain gauge of one of the strain sensors in which the strain level appears at a higher level and the output from the strain gauge of the other of the strain sensors in which the strain level appears at a lower level, it is possible to suppress the influences on the output.

Therefore, even if the input direction of the load to the respective strain generating bodies 30, 32, 34, and 36 is inclined due to the deflection caused in the case cover 14 and the differences in the strain caused in the respective strain gauges of the strain sensors is increased, it is possible to suppress the influence on the instrumental error property.

In addition, the scale 160 of this embodiment is provided with: the above-described strain generating bodies 30, 32, 34, and 36; the case cover 14 that is supported by the load receiving portions 50 of the strain generating bodies 30, 32, 34, and 36; and the case base 12 that supports the fixing portions 48 of the strain generating bodies 30, 32, 34, and 36.

Even in the scale 160, it is possible to achieve the operational advantages similar to those in the first embodiment.

Furthermore, in the scale 160 of this embodiment, the case cover 14 has the rectangular shape, and the strain generating bodies 30, 32, 34, and 36 are respectively arranged on the four corners of the case cover 14.

Even in this configuration, for the components that are the same as or similar to those in the first embodiment, it is possible to achieve the similar operational advantages.

As an example, a case in which the deflection is cause in the case cover 14 and the input direction of the load to the respective strain generating bodies 30, 32, 34, and 36 is inclined will be described. In this case, in the lower strain sensors 170, 172, 174, and 176, as an example, the tensile force generated in the first strain gauges 170a, 172a, 174a, 176a that are arranged on the lower curved sites 80 is increased. In addition, in the lower strain sensors 170, 172, 174, and 176, the compressive force generated in the second strain gauges 170b, 172b, 174b, and 176b that are arranged on the upper curved sites 82 is decreased.

On the other hand, in the upper strain sensors 180, 182, 184, and 186, the compressive force generated in the first strain gauges 180a, 182a, 184a, and 186a that are arranged on the lower curved sites is increased. In addition, in the upper strain sensors 180, 182, 184, and 186, the tensile force generated in the second strain gauges 180b, 182b, 184b, and 186b that are arranged on the upper curved sites is decreased.

In the above, the output from the Wheatstone bridge circuits 190, 192, 194, and 196 is influenced by the combination of the resistance values of the first arms 200, 210, 220, and 230 and the resistance values of the third arms 204, 214, 224, and 234. In addition, the output from the Wheatstone bridge circuits 190, 192, 194, and 196 is influenced by the combination of the resistance values of the second arms 202, 212, 222, and 232 and the resistance values of the fourth arms 206, 216, 226, and 236. Therefore, these combination will be explained.

The first arm and the third arm are formed of the combination of the first strain gauges 180a, 182a, 184a, and 186a of the upper strain sensors 180, 182, 184, and 186 and the second strain gauges 170b, 172b, 174b, and 176b of the lower strain sensors 170, 172, 174, and 176. The compressive force is exerted at a higher level in the first strain gauges 180a, 182a, 184a, and 186a of the upper strain sensors 180, 182, 184, and 186, and the compressive force is exerted at a lower level in the second strain gauges 170b, 172b, 174b, and 176b of the lower strain sensors 170, 172, 174, and 176.

The second arm and the fourth arm are formed of the combination of the second strain gauges 180b, 182b, 184b, and 186b of the upper strain sensors 180, 182, 184, and 186 and the first strain gauges 170a, 172a, 174a, and 176a of the lower strain sensors 170, 172, 174, and 176. The tensile force is exerted at a lower level in the second strain gauges 180b, 182b, 184b, and 186b of the upper strain sensors 180, 182, 184, and 186, and the tensile force is exerted at a higher level in the first strain gauges 170a, 172a, 174a, and 176a of the lower strain sensors 170, 172, 174, and 176.

Therefore, even in a case in which the input direction of the load to the respective strain generating bodies 30, 32, 34, and 36 is inclined and the differences in the strain caused in the strain gauges of the strain sensors is increased, it is possible to suppress the influence on the output from the positive output terminal 134 and the negative output terminal 136.

Therefore, even in a case in which the differences in the strain caused in the strain gauges of the strain sensors due to the deflection caused in the case cover 14 is increased, it is possible to suppress the influence on the instrumental error property.

In this embodiment, the plurality of strain generating bodies (30, 32, 34, 36) are provided, and the Wheatstone bridge circuits 190, 192, 194, and 196 that are respectively formed of the strain generating bodies (30, 32, 34, 36) are connected in parallel. Specifically, the Wheatstone bridge circuits 190, 192, 194, and 196 that are respectively formed of the strain gauges 170a, 172a, 174a, 176a, 180b, 182b, 184b, and 186b of the strain generating bodies (30, 32, 34, 36) are connected in parallel.

According to such a configuration, because a determination result can be obtained by using the output from the Wheatstone bridge circuits 190, 192, 194, and 196, which are connected in parallel, it is possible to improve determination accuracy.

Note that, in this embodiment, although the description has been given for the scale 160 that is provided with the strain generating bodies 30, 32, 34, and 36, which respectively support the four corners of the case cover 14, the present invention is not limited to this configuration, and the strain generating bodies that support the case cover 14 and that detect the load may be provided at at least two locations.

### <Fourth Embodiment>

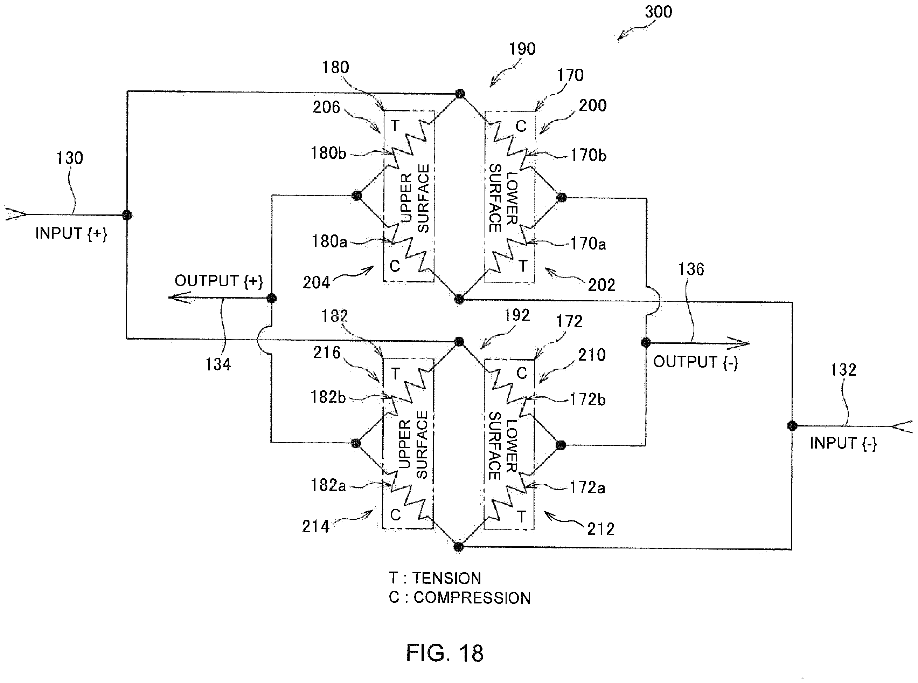

FIG. 18 is a circuit diagram showing the connection state of the strain gauges 170a, 172a, 180a, 182a, 170b, 172b, 180b, and 182b of the strain sensors 170, 172, 180, and 182 according to the fourth embodiment.

A scale 300 according to the fourth embodiment differs from that of the third embodiment in that the strain generating bodies that support the case cover 14 and that detect the load are formed of the first strain generating body 30 and the second strain generating body 32. In this fourth embodiment, components that are the same as or similar to those in the third embodiment will be assigned the same reference numerals, and a description thereof shall be omitted.

As shown in FIG. 18, the first Wheatstone bridge circuit 190 is formed of the first lower strain sensor 170 that is arranged on the lower surface 56d of the strain generating part 56 of the first strain generating body 30 and the first upper strain sensor 180 that is arranged on the upper surface 56u of the strain generating part 56 of the first strain generating body 30.

In addition, the second Wheatstone bridge circuit 192 is formed of the second upper strain sensor 182 that is arranged on the upper surface 56u of the strain generating part 56 of the second strain generating body 32 and the second lower strain sensor 172 that is arranged on the lower surface 56d of the strain generating part 56 of the second strain generating body 32.

The first arm 200 of the first Wheatstone bridge circuit 190 is formed of the second strain gauge 170b of the first lower strain sensor 170, in which the compressive force is exerted at a lower level. The second arm 202 of the first Wheatstone bridge circuit 190 is formed of the first strain gauge 170a of the first lower strain sensor 170, in which the tensile force is exerted at a higher level.

The third arm 204 that opposes to the first arm 200 is formed of the first strain gauge 180a of the first upper strain sensor 180, in which the compressive force is exerted at a higher level, and the fourth arm 206 that opposes to the second arm 202 is formed of the second strain gauge 180b of the first upper strain sensor 180, in which the tensile force is exerted at a lower level.

The connection part between the first arm 200 and the fourth arm 206 of the first Wheatstone bridge circuit 190 is connected to the positive input terminal 130, and the connection part between the second arm 202 and the third arm 204 is connected to the negative input terminal 132. In addition, the connection part between the third arm 204 and the fourth arm 206 is connected to the positive output terminal 134, and the connection part between the first arm 200 and the second arm 202 is connected to the negative output terminal 136.

The first arm 210 of the second Wheatstone bridge circuit 192 is formed of the second strain gauge 172b of the second lower strain sensor 172, in which the compressive force is exerted at a lower level. The second arm 212 of the second Wheatstone bridge circuit 192 is formed of the first strain gauge 172a of the second lower strain sensor 172, in which the tensile force is exerted at a higher level.

The third arm 214 that opposes to the first arm 210 is formed of the first strain gauge 182a of the second upper strain sensor 182, in which the compressive force is exerted at a higher level. The fourth arm 216 that opposes to the second arm 212 is formed of the second strain gauge 182b of the second upper strain sensor 182, in which the tensile force is exerted at a lower level.

The connection part between the first arm 210 and the fourth arm 216 of the second Wheatstone bridge circuit 192 is connected to the positive input terminal 130, and the connection part between the second arm 212 and the third arm 214 is connected to the negative input terminal 132. In addition, the connection part between the third arm 214 and the fourth arm 216 is connected to the positive output terminal 134, and the connection part between the first arm 210 and the second arm 212 is connected to the negative output terminal 136.

The positive output terminal 134 and the negative output terminal 136 are connected to the control device (not shown), and the control device computes the load applied to the case cover 14 from an electric potential between the positive output terminal 134 and the negative output terminal 136 and displays a computation result as the body weight.

Note that, in this embodiment, the first arms 200 and 210 and the second arms 202 and 212 of the Wheatstone bridge circuits 190 and 192 are respectively formed by using the strain gauges 170a, 172a, 170b, and 172b of the lower strain sensors 170 and 172. In addition, the third arms 204 and 214 and the fourth arms 206 and 216 are respectively formed by using the strain gauges 180a, 182a, 180b, and 182b of the upper strain sensors 180 and 182. However, in this embodiment, the present invention is not limited to this configuration.

For example, the first arms 200 and 210 and the second arms 202 and 212 of the Wheatstone bridge circuits 190 and 192 may respectively be formed of the strain gauges 180a, 182a, 180b, and 182b of the upper strain sensors 180 and 182. The third arms 204 and 214 and the fourth arms 206 and 216 may respectively be formed of the strain gauges 170a, 172a, 170b, and 172b of the lower strain sensors 170 and 172.

### (Operations and Effects)

Also in this embodiment, it is possible to achieve the operational advantages similar to those in the third embodiment.

In addition, the load cell 420 of this embodiment is provided with the strain generating bodies (30, 32) and the wiring that forms the Wheatstone bridge circuits 190 and 192. By using the wiring, the first strain gauges 180a and 182a of the upper strain sensors 180 and 182 are connected to the second strain gauges 180b and 182b of the upper strain sensors 180 and 182 in the strain generating bodies (30, 32). In addition, by using the wiring, the first strain gauges 170a and 172a of the lower strain sensors 170 and 172 are connected to the second strain gauges 170b and 172b of the lower strain sensors 170 and 172.

According to such a configuration, it is possible to obtain the determination result by using the output from the Wheatstone bridge circuits 190 and 192 respectively formed of the strain gauges 170a, 172a, 170b, 172b, 180a, 182a, 180b, and 182b.

In addition, the load cell 420 of this embodiment is provided with a plurality of the strain generating bodies (30, 32), and the Wheatstone bridge circuits 190 and 192 that are respectively formed of the strain generating bodies (30, 32) are connected in parallel.

According to such a configuration, because it is possible to obtain the determination result by using the output from the Wheatstone bridge circuits 190 and 192 that are connected in parallel, it is possible to improve the determination accuracy.

Although the embodiments of the present invention have been described in the above, the above-mentioned embodiments merely illustrate a part of application examples of the present invention, and the technical scope of the present invention is not intended to be limited to the specific configurations of the above-described embodiments.

The present application claims priority to Japanese Patent Application No. 2021-005215, filed in the Japan Patent Office on January 15, 2021. The contents of this application are incorporated herein by reference in their entirety.

### Reference Signs List

10 scale
12 case base
14 case cover
30 first strain generating body
32 second strain generating body
34 third strain generating body
36 fourth strain generating body
48 fixing portion
50 load receiving portion
56 strain generating part
56d lower surface (back surface)
56u upper surface (front surface)
80 lower curved site (recessed site)
82 upper curved site (projected site)
90 first strain sensor
90a, 92a, 94a, 96a first strain gauge
90b, 92b, 94b, 96b second strain gauge
92 second strain sensor
94 third strain sensor
96 fourth strain sensor
160 scale
170 first lower strain sensor (first back surface strain sensor)
170a, 172a, 174a, 176a first strain gauge
170b, 172b, 174b, 176b second strain gauge
172 second lower strain sensor (second back surface strain sensor)
174 third lower strain sensor (third back surface strain sensor)
176 fourth lower strain sensor (fourth back surface strain sensor)
180 first upper strain sensor (first front surface strain sensor)
180a, 182a, 184a, 186a first strain gauge
180b, 182b, 184b, 186b second strain gauge
182 second upper strain sensor (second front surface strain sensor)
184 third upper strain sensor (third front surface strain sensor)
186 fourth upper strain sensor (fourth front surface strain sensor)
300 scale
420 load cell

## Claims

1. A scale comprising:
a case base;
a case cover arranged on the case base, the case cover being configured such that a load is applied to the case cover;
a plurality of strain generating bodies configured to support the case cover on the case base, the strain generating bodies each having a strain generating part, the strain generating part being configured to be elastically deformed by receiving the load applied to the case cover; and
a strain sensor provided on the strain generating part of each of the strain generating bodies, the strain sensor being configured to give a resistance value varied in accordance with tension and compression due to deformation of the strain generating part, wherein
the strain sensor comprises a first strain gauge and a second strain gauge, the first strain gauge being arranged at a site deformed into a recessed shape in a state in which the strain generating part is elastically deformed, and the second strain gauge being arranged at a site deformed into a projected shape in a state in which the strain generating part is elastically deformed, and
in a mutually adjacent pair among the strain generating bodies, the strain sensor of the strain generating body serving as a first partner of the pair is arranged on a front surface of the strain generating part, and the strain sensor of the strain generating body serving as a second partner of the pair is arranged on a back surface of the strain generating part.

2. The scale according to claim 1, wherein
the strain generating bodies are arranged at four locations,
in the strain generating body serving as the first partner of the mutually adjacent pair among the strain generating bodies, the strain sensor is arranged on the front surface of the strain generating part, and in the strain generating body serving as the second partner of the mutually adjacent pair among the strain generating bodies, the strain sensor is arranged on the back surface of the strain generating part.

3. The scale according to claim 1 or 2, wherein
the strain sensor comprises:
a first contact terminal connected to a first end of the first strain gauge;
a second contact terminal connected to a first end of the second strain gauge; and
a third contact terminal connected to a second end of the first strain gauge and a second end of the second strain gauge.

4. A strain generating body comprising:
a load receiving portion configured to receive a load;
a fixing portion fixed to an attachment target;
a strain generating part configured to join the load receiving portion with the fixing portion, the strain generating part being configured to be elastically deformed due to displacement of the load receiving portion; and
a strain sensor provided on the strain generating part, the strain sensor being configured to give a resistance value varied in accordance with tension and compression due to the elastic deformation of the strain generating part, wherein
the strain sensor includes a first strain gauge and a second strain gauge, the first strain gauge being arranged at a site deformed into a recessed shape in a state in which the strain generating part is elastically deformed when the load is received by the load receiving portion, and the second strain gauge being arranged at a site deformed into a projected shape in a state in which the strain generating part is elastically deformed when the load is received by the load receiving portion, and
the strain sensor includes: a front surface strain sensor arranged on a front surface of the strain generating part; and a back surface strain sensor arranged on a back surface of the strain generating part.

5. The strain generating body according to claim 4, wherein
the strain sensor is provided with:
a first contact terminal connected to a first end of the first strain gauge;
a second contact terminal connected to a second end of the first strain gauge;
a third contact terminal connected to a first end of the second strain gauge; and
a fourth contact terminal connected to a second end of the second strain gauge.

6. A load cell comprising:
the strain generating body according to claim 4 or 5; and
wiring forming an Wheatstone bridge circuit by connecting, in the strain generating body, the first strain gauge of the front surface strain sensor, the second strain gauge of the front surface strain sensor, the first strain gauge of the back surface strain sensor, and the second strain gauge of the back surface strain sensor.

7. The load cell according to claim 6, comprising
a plurality of the strain generating bodies, wherein the Wheatstone bridge circuits formed of the respective strain generating bodies are connected in parallel.

8. A scale comprising:
the strain generating body according to claim 4 or 5;
a case cover supported by the load receiving portion of the strain generating body; and
a case base configured to support the fixing portion of the strain generating body.

9. The scale according to claim 8, wherein
the case cover has a rectangular shape, and the strain generating body is arranged on each of four corners of the case cover.
